# EUROPEAN PATENT APPLICATION

(11) **EP 2 008 629 A2**
(43) Date of publication of application: **31.12.2008**
(21) Application number: 08252193.1
(22) Date of filing: 26.06.2008
(51) Int. Cl.: A61G 5/04

(54) **Wheelchair transporter**

(30) Priority: 28.06.2007 US 770436
(71) Applicant: Dane Industries, Inc., Brooklyn Park, Minnesota 55428 (US)
(72) Inventor: Wiff, James W., Cologne Minnesota 55322 (US); Holtan, Paul D., Savage Minnesota, 55378 (US)
(74) Representative: Miller, James Lionel Woolverton

(57) **Abstract**

The present invention is a device (10) adapted to transport wheelchair (5). The device comprises a body (110), a motor driven wheel (130) coupled to the body, and a hitch mechanism (15) coupled to the body. The hitch mechanism includes a first wheelchair engagement member displaceable relative to rest of the hitch mechanism.

## Description

United States of America Patent Applications Nos. 11/361,136 and 60/656,755 are incorporated herein by reference in their entireties.

### FIELD OF THE INVENTION

This invention relates to devices for, and methods of transporting individuals in wheelchairs. More particularly, this invention relates to devices for, and methods of, providing powered assistance to a wheelchair to assist an operator in manoeuvring and displacing the wheelchair when transporting an individual in the wheelchair.

### BACKGROUND OF THE INVENTION

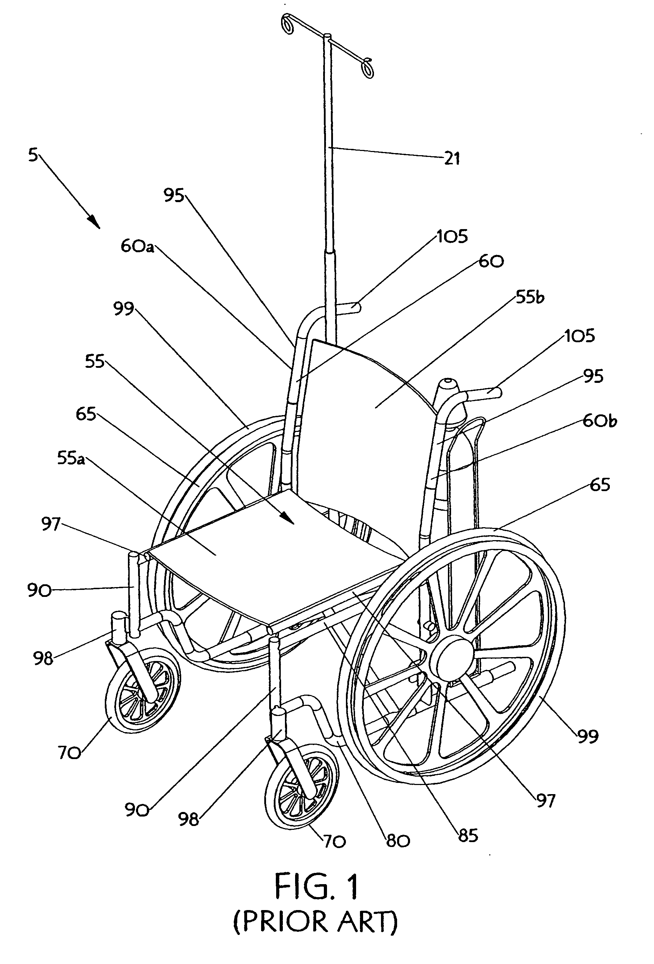

Wheelchairs 5, such as depicted in prior art Figs. 1-3, are known in the art and are used to provide improved mobility of healthcare patients, which has resulted in various benefits to the healthcare industry and patients. Wheelchairs 5 help lower healthcare costs by making hcalthcarc providers more efficient. For example, wheelchairs 5 allow patients to be more easily transported to visit lab departments, as opposed to having the lab personnel visit the patient. Wheelchairs 5 also provide comfort to patients during movement as opposed to using crutches, a cane, or being supported by someone while walking.

Along with various benefits, there are problems associated with moving patients seated in wheelchairs 5. For example, some hospitals have ramps between uneven building floor levels. As such, the person pushing the wheelchair 5 has to provide extra force to move the patient and wheelchair 5 up and down these ramps. The use of carpets on floors of many buildings to reduce objectionable sounds also increases the force required to push a patient in a wheelchair 5. In addition, the need to transport overweight patients has led to the development of bariatric wheelchairs 5 that, with the patient seated thereon, are very heavy and difficult to push. Further, some hospitals have patient transport teams that move patients in wheelchairs 5 for an entire work shift. When the wheelchair push force is high, it is possible to cause repetitive strains in the person pushing the wheelchair 5, which may result in injury.

To help alleviate these problems, some healthcare facilities have invested in powered wheelchairs. However for some healthcare facilities that have invested in large numbers of manual wheelchairs 5, it may not be economically feasible to replace these wheelchairs 5 with powered wheelchairs. To address this problem, the applicants for this application developed their first powered wheelchair transporter. This first wheel chair transporter was adapted to be releasably coupled to a wheelchair 5 to provide powered assistance to an operator to maneuver a manual wheelchair 5 similarly to a powered wheelchair.

While the applicants' first wheelchair transporter was advantageous, it was limited in that it could only be coupled to a wheelchair 5 of a specific size and configuration. It was discovered that the average healthcare facility often employs wheelchairs 5 of different sizes and configurations. Accordingly, there is a need in the art for a wheelchair transporter that is equipped with a hitching arrangement that allows the wheelchair transporter to be easily coupled to a wide variety of wheelchair sizes and configurations.

### BRIEF SUMMARY OF THE INVENTION

The present invention, in one embodiment, is a device adapted to transport wheelchairs. The device comprises a body, a motor driven wheel coupled to the body, and a hitch mechanism coupled to the body. The hitch mechanism includes a first wheelchair engagement member displaceable relative to rest of the hitch mechanism.

The present invention, in one embodiment, is a device adapted to transport wheelchairs. The device comprises a body, a motor driven wheel coupled to the body, and a hitch mechanism coupled to the body. The hitch mechanism includes at least one wheelchair engagement member, wherein the hitch mechanism is displaceable relative to the body.

The present invention, in one embodiment, is a device adapted to transport wheelchairs. The device comprises a body, a motor driven wheel coupled to the body, and a hitch mechanism coupled to the body. The hitch mechanism includes means for engaging the hitch mechanism to the wheelchair.

The present invention in one embodiment is a method of transporting a wheelchair with a wheelchair transporter including a body, a powered drive wheel coupled to the body, and a hitch mechanism coupled to the body. The hitch mechanism includes a wheelchair engagement member. The method comprises displacing the wheelchair engagement member relative to the body, and engaging the wheelchair with the wheelchair engagement member.

The features, utilities, and advantages of various embodiments of the invention will be apparent from the following more particular description of embodiments of the invention as illustrated in the accompanying drawings and defined in the appended claims.

### BRIEF DESCRIPTION OF THE DRAWINGS

Fig. 1 is a left-front isometric view of a wheelchair.
Fig. 2 is a right-rear isometric view of the wheelchair of Fig. 1.
Fig. 3 is a detailed rear view of the wheelchair of Fig. 1 shown without an oxygen bottle and IV pole.
Fig. 4 is a right-rear isometric view of a wheelchair transporter.
Fig. 5 is a left-front isometric view of the wheelchair transporter shown in Fig.4.
Fig. 6 is a left-front isometric view of the wheelchair transporter of Fig. 4 with a front side partially hidden.
Fig. 7 is a left-rear isometric view of the wheelchair transporter of Fig. 4 with a rear side partially hidden.
Fig. 8 is an exploded view of a front drive wheel and motor of the wheelchair transporter of Fig. 4.
Figs. 9A and 9B are detailed views of the hitch mechanism with right and left hitch members in extended positions.
Figs. 10A and 10B are detailed views of the hitch mechanism with right and left hitch members in retracted positions.
Fig. 11 shows an operator maneuvering the wheelchair transporter behind a wheelchair.
Fig. 12 is a detailed view of the wheelchair transporter connected with a wheelchair.
Fig. 13 is a right-rear isometric view of the wheelchair transporter with a right side in phantom.
Fig. 14 is a right-rear isometric view of the wheelchair transporter with the right and rear sides in phantom.
Fig. 15 is a detailed view of a hitch linkage assembly and hitch mechanism.
Figs. 16A and 16B are exploded views of the hitch mechanism and hitch base.
Fig. 17A is a detailed view of the hitch base.
Fig. 17B is a section view of the hitch base as taken along section line 17B-17B in Fig. 17A.
Fig. 18 is a detailed view of a cable connection.
Figs. 19A and 19B are detailed views of the hitch mechanism and hitch base in a centered position.
Figs. 20A and 20B are detailed views of the hitch mechanism and hitch base shifted to a leftward position.
Fig. 21A is a right side detailed view of the hitch base control linkage.
Fig. 21B is a left side detailed view of the hitch base control linkage.
Fig. 22 is a left-front isometric view of a wheelchair transporter employing a powered hitch actuator.
Fig.23 is a detailed view of the locking/release, hitch linkage and hitch assemblies.
Fig. 24 is a detailed view of the upper portions of the locking/release and hitch linkage mechanisms depicted in Fig. 23.
Fig. 25 is a detailed view of the hitch assembly and lower portions of the locking/release and hitch linkage mechanisms depicted in Fig. 23.
Fig. 26 is a left-front isometric view of a wheelchair transporter employing a two part hitch cover that generally covers the entire hitch mechanism.

### DETAILED DESCRIPTION OF THE INVENTION

### a. Overview of Invention

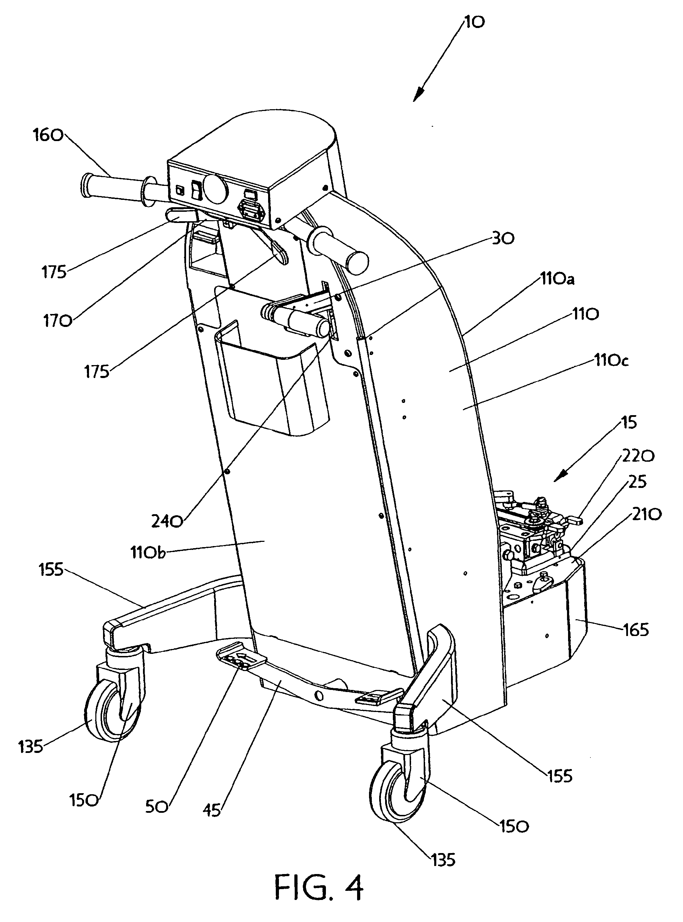

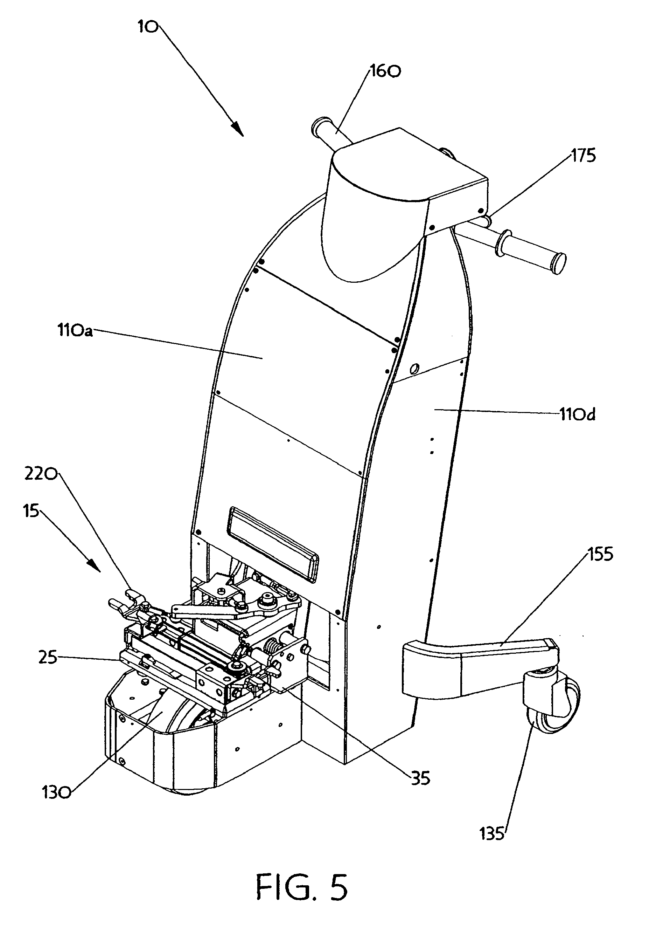

Figs. 4 and 5 illustrate an embodiment of a wheelchair transporter 10 equipped with a hitch mechanism 15 that allows an operator 17 to releasably connect the wheelchair transporter 10 to a variety of wheelchair configurations and sizes and in a variety of ways. The wheelchair transporter 10 is a wheeled vehicle used to provide powered assistance to a person moving a wheelchair 5 from one location to another.

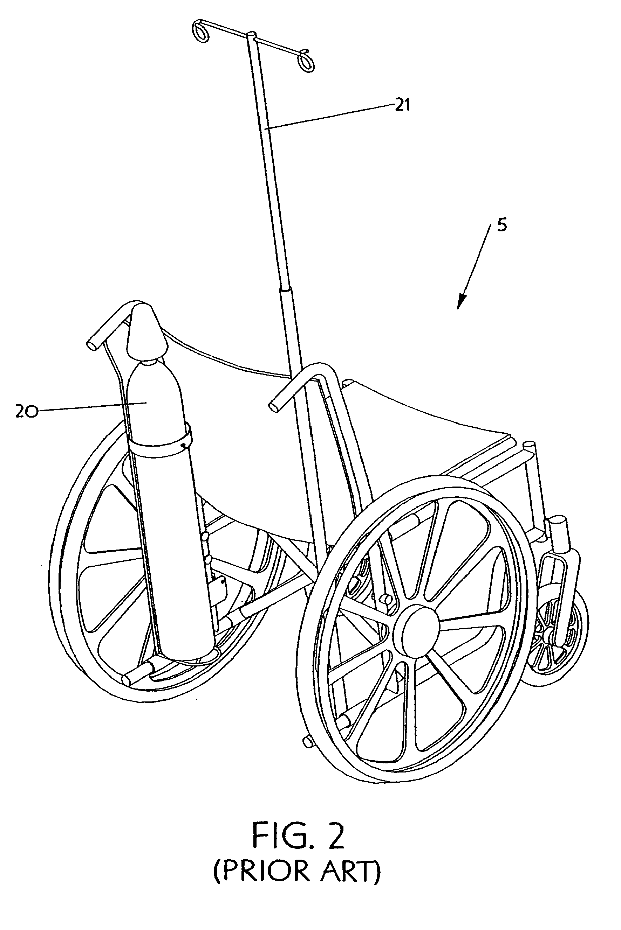

As indicated in Fig. 2, wheelchairs 5 are sometimes equipped with various components 20, 21, such as an oxygen bottle 20 and/or an IV pole 21. Such components 20, 21 can interfere with the operator's ability to connect the wheelchair transporter 10 with the wheelchair 5. As such, the hitch mechanisms 15 of some embodiments of the wheelchair transporter 10 are mounted on a movable base 25 that allows an operator 17 to maneuver the hitch mechanism 15 around such components 20, 21. The movable base 25 allows an operator 17 to connect and disconnect the hitch mechanism 15 with the wheelchair 5 without having to move the entire wheelchair transport system 10 to avoid hitting various components 20, 21 mounted on a wheelchair 5.

As described in more detail below, in one embodiment, the wheelchair transporter 10 includes a single mechanical lever 30 used to control the hitch mechanism 15 to connect and disconnect the hitch mechanism 15 with a wheelchair 5. More particularly, the hitch mechanism 15 includes hitch members 35 that can be extended to connect the wheelchair transporter 10 with the wheelchair 5, and retracted to disconnect the wheelchair transporter 10 from the wheelchair 5. The operator 17 moves the mechanical lever 30 to control the extension and retraction of left and right hitch members 35.

Some embodiments of the wheelchair transporter 10 include a control lever 30 that positively connects the wheelchair transporter 10 with the wheelchair 5. In other words, once the operator 17 moves the control lever 30 to connect the hitch members 35 with the wheelchair 5, forces exerted on the hitch members 35 when moving the wheelchair 5 are prevented from moving the control lever 30 to inadvertently disconnect the hitch mechanism 15 from the wheelchair 5. For example, as described in more detail below, to provide a positive engagement of the hitch members 35 with the wheelchair, the transporter 10 may be equipped with a locking/release mechanism 702 that extends between the control lever 30 and the hitch mechanism 15.

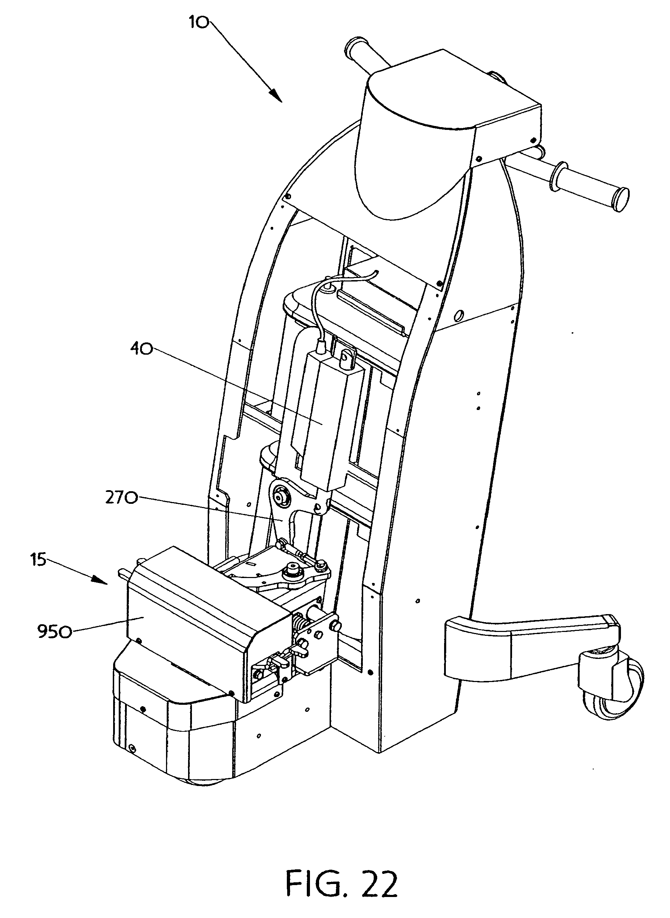

Some embodiments of the wheelchair transporter 10 employ an electrical actuator or motor 40, as depicted in Fig. 22, to control the hitch mechanism 15 and, more specifically, the extension and retraction of the hitch members 35 instead of the mechanical lever 30 shown in Figs. 4-5. In other embodiments, the wheelchair transporter 10 will employ both an electrical actuator 40 and a mechanical lever 30, wherein the mechanical lever 30 serves as a backup or emergency mechanism for attaching to, or detaching from, the wheelchair 5.

As described below, in one embodiment, the hitch mechanism 15 is mounted on a movable base 25, and the wheelchair transporter 10 includes a base control lever 45 that is used to manually control the movement of the base 25. The movable base 25 allows an operator 17 to more easily maneuver the hitch mechanism 15 around various objects 20, 21 when connecting and disconnecting the wheelchair transporter 10 with a wheelchair 5 without having to steer the entire wheelchair transporter 10 around such objects 20, 21.

In one embodiment, the base control lever 45 is provided with footpads 50 to allow an operator 17 to manually move the base 25 back and forth in the left and right directions by stepping on the footpads 50. As such, the operator 17 can apply force on a footpad 50 to move the hitch base 25 in a particular direction from a first position to a second position. Springs can also be used to automatically return the hitch base 25 to the first position when the operator 17 releases the force on the footpad 50.

In one embodiment, the wheelchair transporter 10 is provided with a powered mechanism for displacing the hitch base 25. Specifically, a motorized actuator causes the hitch base 25 to displace as directed by an electric control mounted on the wheelchair transporter 10.

Embodiments of the wheelchair transporter 10 and hitch mechanism 15 are described herein with the perspective of an operator 17 standing behind a wheelchair 5 and/or a wheelchair transporter 10. For example, components designated as "right" are on the right side of the wheelchair 5 and wheelchair transporter 10 as if viewed from the perspective of an operator 17 in the previously described position. It is to be appreciated, however, that aspects of the invention are not limited to the orientation of an operator 17, but left and right references are used merely for the convenience of the reader.

As indicated in Fig. 22, embodiments of the wheelchair transporter 10 may include a removable cover 950 that extends over the hitch mechanism 15. The cover 950 protects the components of the hitch mechanism 15 from being damaged via impacts with wheelchair frames or other obstructions. Also, the cover 950 prevents clothing or appendages of a person from being caught in the components of the hitch mechanism 15. While all of the figures, with the exception of Fig. 22, illustrate the hitch mechanism 15 with the cover 950 hidden for clarity purposes, it should be understood the cover 950 can be provided any of the wheelchair transporter embodiments disclosed herein, regardless of whether the hitch mechanism is manually actuated as in Fig. 5 or powered as in Fig. 22.

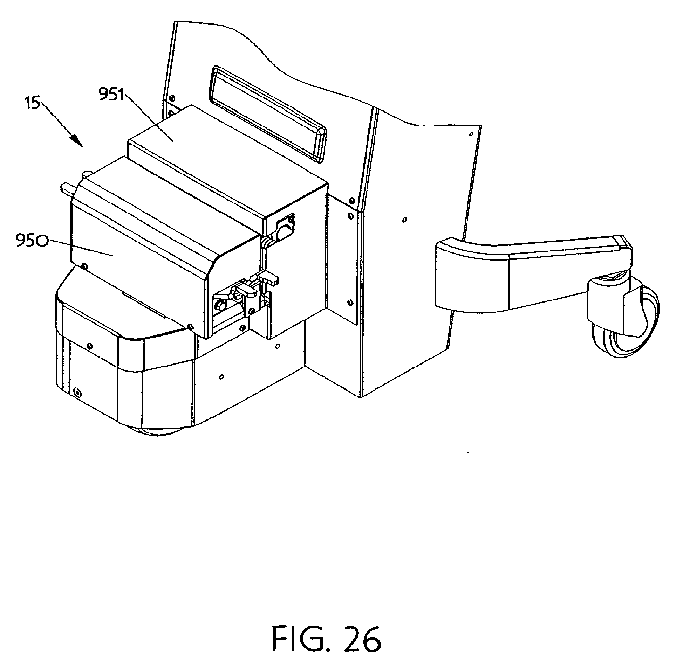

As indicated in Fig. 26, in some embodiments, the wheelchair transporter 10 may include two removable covers 950, 951 that extend over the hitch mechanism 15 to generally cover the entire hitch mechanism 15. Specifically, a forward cover 950, which is similar to the cover 950 depicted in Fig. 22, will extend over the forward half of the hitch mechanism 15, and a rearward cover 951 will extend over the rearward half of the hitch mechanism 15.

### b. Overview of a Typical Wheelchair

Wheelchairs 5 used to provide assistance with transporting people from one location to another are known in the art. As such, it is to be appreciated that the present invention can be used with various types of wheelchairs 5 configured in different ways and should not be construed to be limited to use with the wheelchair 5 depicted and described herein. As shown in Figs. 1-3, a wheelchair 5 typically includes a seat 55 supported by a frame 60 having wheels 65, 70 adapted to rollingly engage a support surface, such as the floor or the ground. A person being transported on the wheelchair 5 sits on the seat 55 while another person pushes or pulls the wheelchair 5 to move from one location to another.

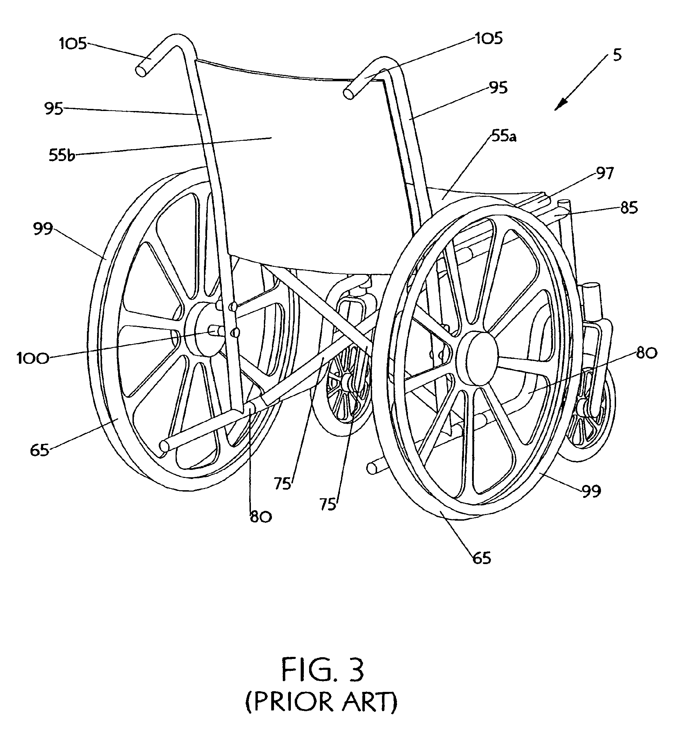

The seat 55 of the wheelchair 5 shown in Figs. 1-3 includes a seat portion 55a and a back portion 55b connected with and supported by the frame 60. The frame 60 includes right and left sides 60a, 60b connected with and separated by the seat portion 55a and the back portion 55b of the seat 55 as well as first and second cross members 75. As shown in Figs. 1 and 3, the right and left sides 60a, 60b of the frame 60 are substantially mirror images of each other and each include right and left lower members 80, upper members 85, forward upright members 90, and rear upright members 95. More particularly, the rear upright and forward upright members 90, 95 extend upwardly from rear and forward end portions of the lower members 80, respectively. The upper members 85 extend rearwardly from upper end portions of the forward upright members 90 to connect with the rear upright members 95. The first cross member 75 extends upward and rightward from the left lower member 80 to the right upper member 85, and the second cross member 75 extends upward and leftward from the right lower member 80 to the left upper member 85. The seat portion 55a of the seat 55 extends between right and left side members 97 connected with right and left upper members 85, respectively. The back portion 55b of the seat 55 extends between the right and left rear upright members 95. Upper end portions of the rear upright members 95 extend rearwardly to define right and left handles 105 that provide a location for a user to push or pull the wheelchair 5.

As shown in Figs. 1-3, the frame 60 is supported by two rear wheels 65 and two front wheels 70. The front wheels 70 are caster wheels 70 rotatably connected with caster support members 98 pivotally connected with forward end portions of the right and left lower members 80 of the wheelchair frame 60. The rear wheels 65 are rotatably supported by axles 100 extending outward from the right and left rear upright members 95. The wheelchair 5 can also include circular handles 99 connected with the rear wheels 65 that provide a means for a patient seated in the wheelchair 5 to rotate the rear wheels 65.

### c. Detailed Discussion of Features of the Wheelchair Transporter

Figs. 4-8 show one embodiment of a powered wheelchair transporter 10 equipped with a hitch mechanism 15 adapted to be capable of being easily releasably coupled to a wide variety of wheelchair sizes and configurations. The wheelchair transporter 10 includes a main body 110 housing various components, such as batteries 115, motor controls or controller 120, battery charger 125 and associated electronics. As shown in Figs. 4-7, the body 110 includes front and rear sides 110a, 110b connected with and separated by right and left sides 110c, 110d and is supported by three wheels 130, 135. More particularly, the wheelchair transporter 10 includes a front drive wheel 130 and two rear caster wheels 135. The front drive wheel 130 is driven by an electric motor 140 controlled by the operator 17 and powered by batteries 115 stored inside the body 110. The wheelchair transporter 10 can include an integral motor gearbox brake or a right angle gearbox 145 with motor 140 and brake for the front drive wheel 130. A hub 146 is received on the gearbox 145 and the drive wheel 130 is received on the hub 146. The right and left rear caster wheels 135 are rotatably connected with caster support members 150 pivotally connected with rearward end portions of right and left wheel support members 155 extending rearward from lower end portions of the right and left sides 110c, 110d of the body 110. Although the wheelchair transporter 10 described and depicted herein includes three wheels 130, 135 to support the body 110, it is to be appreciated that other embodiments can utilize more or less than three wheels 130, 135. For example, the body 110 of one embodiment of the wheelchair transporter 10 is supported by a single wheel. Other embodiments include more than one drive wheel. For example, one embodiment of the wheelchair transporter 10 includes dual drive wheels 130 with a transaxle including a differential.

In one embodiment, the drive wheel 130 and its mounting arrangement are configured such that the drive wheel 130 does not pivot relative to the rest of the wheelchair transporter 10. Thus, to cause the wheelchair transporter 10 and the attached wheelchair 5 to turn when traveling along a support surface, the operator 17 must apply force to the handlebars 160 much like the operator 17 would apply force to the handles of the wheelchair 5 in making the wheelchair 5 turn.

In another embodiment, the drive wheel 130 and its mounting arrangement are configured such that the drive wheel 130 does pivot relative to the rest of the wheelchair transporter 10. In other words, the drive wheel 130 is steerable. In one embodiment, the handlebars 160 are pivotally coupled to the body 110 of the wheelchair transporter 10 and coupled to the drive wheel 130 mechanically or electrically such that pivoting the handlebars 160 causes the drive wheel 130 to pivot relative to the rest of the wheelchair transporter 10.

In one embodiment, the handlebars 160 are not pivotable relative to the body 110, but are instead force sensitive such that a force applied against the handlebars 160 in one direction causes the drive wheel 130, which is electrically coupled to the force sensing mechanism of the handlebars 160, to pivot. Thus, the drive wheel 130 is steerable, despite the handlebars 160 being non-pivotable.

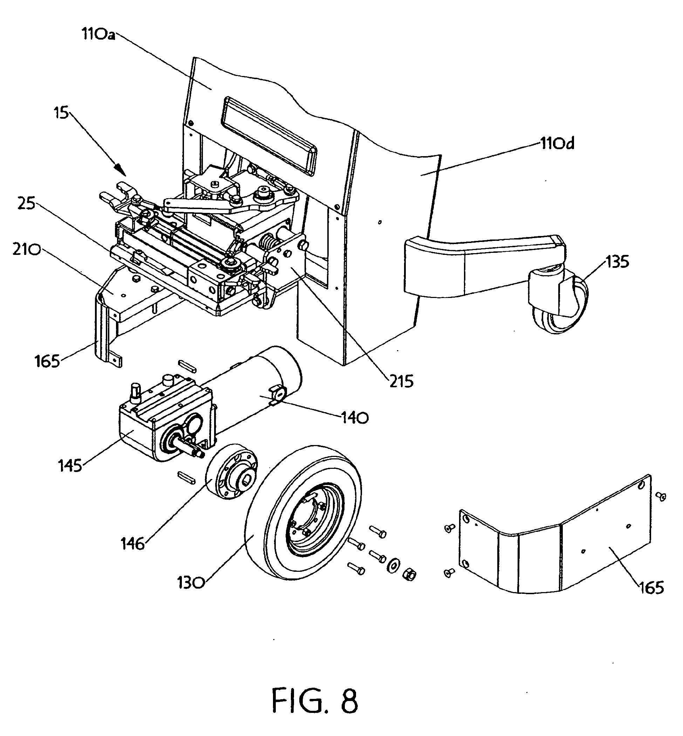

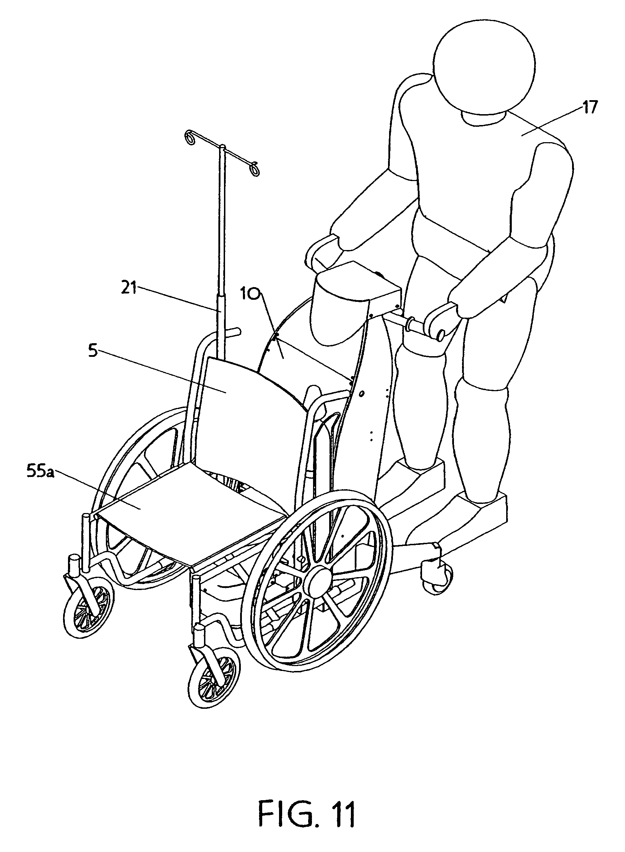

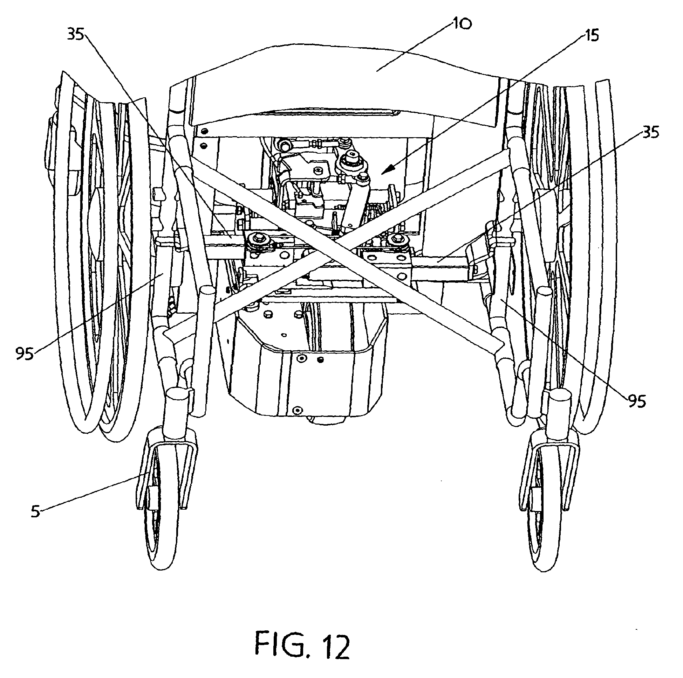

As shown in Fig. 8 and others, the front drive wheel 130 and motor 140 are partially covered by a shield 165 that extends forwardly from the lower end portion of the front side 110a of the body 110. The hitch mechanism 15 is mounted on a hitch base 25 above the front drive wheel 130 and motor 140. As shown in Figs. 11 and 12, the height of the hitch mechanism 15 provides sufficient clearance to allow an operator 17 to maneuver the wheelchair transporter 10 to place the hitch mechanism 15 under the seat portion 55a of the wheelchair 5 without interference.

The wheelchair transporter 10 can include various types of accessories that allow the user to easily maneuver and control the wheelchair transporter 10. For example, as shown in Fig. 4-8, the wheelchair transporter 10 includes a handlebar 160 connected with the upper end portion of the rear side 110b that allows an operator 17 to steer the wheelchair transporter 10. The wheelchair transporter 10 (and connected wheelchair 5) is turned by pushing and/or pulling in opposing directions on opposite end portions of the handlebar 160, which cause the rear caster wheels 135 to roll in a desired direction as the wheelchair transporter 10 pivots about the contact point between the front drive wheel 130 and the support surface. The wheelchair transporter 10 also includes a throttle lever 170 in close proximity to the handlebar 160, which allows an operator 17 to control the operation of the motor 140 driving the front drive wheel 130. The throttle lever 170 can be configured with thumb pads 175 upon which the operator 17 can press to manipulate the throttle lever 170 to start and stop the motor 140 as well as operate the wheelchair transporter 10 in forward and reverse directions.

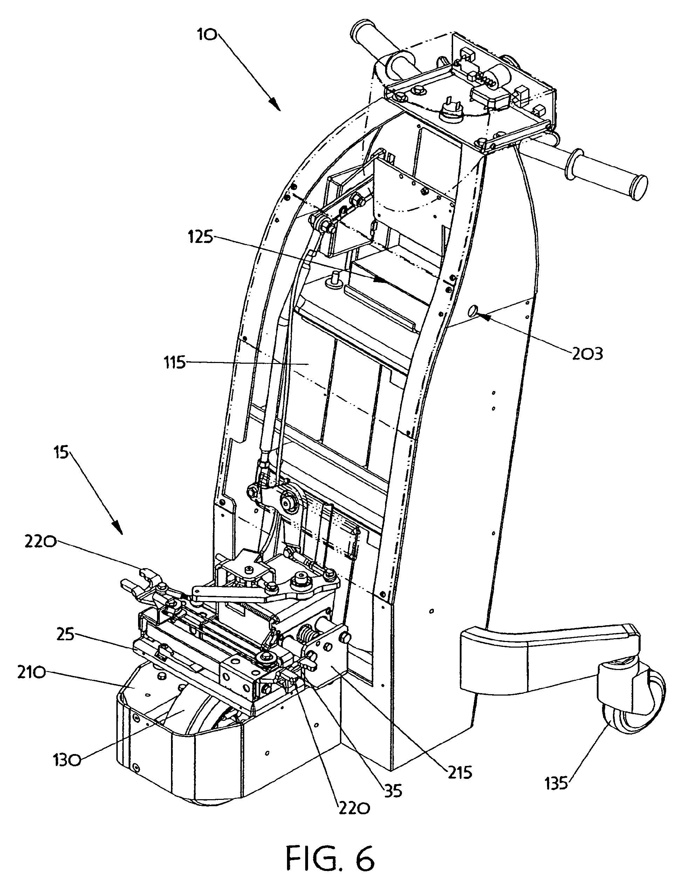

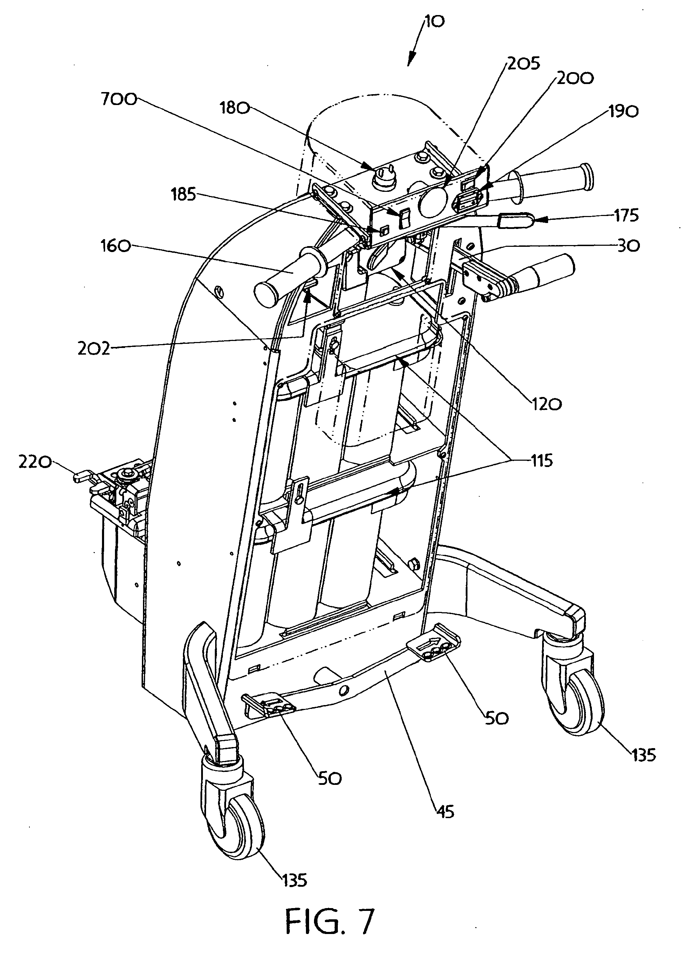

As shown in Figs. 6 and 7, the wheelchair transporter 10 can be equipped with various other accessories such as a backup buzzer 180, a horn 185, LED status lights 190, on/off switches 200, master on/off switch 202, battery charger status light 203, an emergency backup switch 205 in the form of a belly button type switch and a fast/slow switch 700. The wheelchair transporter 10 can also include an electronic drive controller 120 as well as an on board battery charger 125 and cord. It is also to be appreciated that the wheelchair transporter 10 can be configured in different shapes and sizes and should not be construed to be limited to that which is depicted and described herein. For example, the body 110 of the wheelchair transporter 10 can be configured such that it is not wider than a wheelchair 5. In addition, the body 110 of the wheelchair transporter 10 can be configured to minimize overall length of the combination of the wheelchair 5 and body 110 of the wheelchair transporter 10. Further, the wheelchair transporter 10 can be configured to provide the operator 17 with a substantially unobstructed view of the hitch as well as a patient seated in the wheelchair 5 when operating the wheelchair transporter 10.

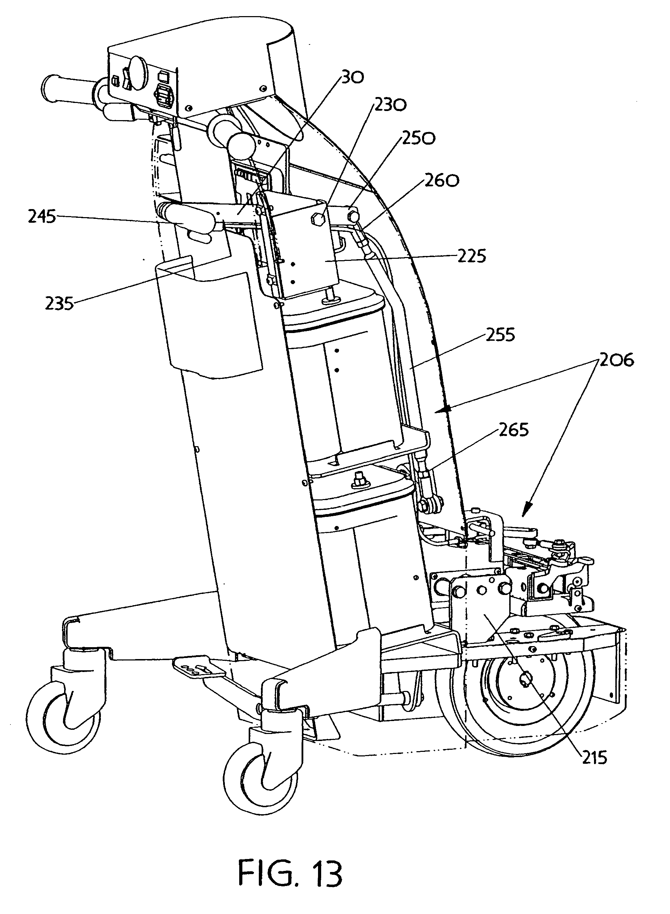

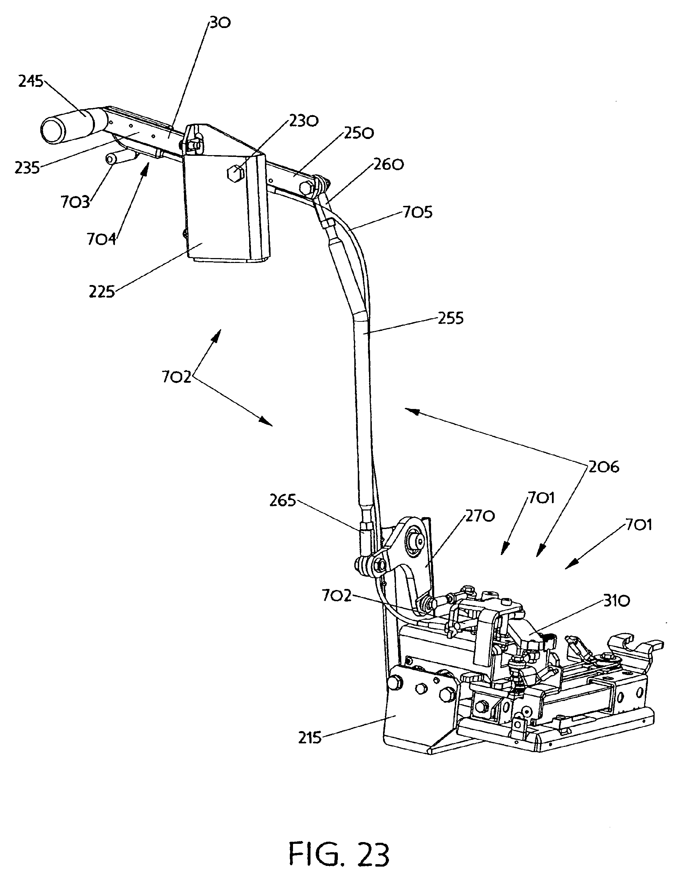

As previously mentioned, the hitch mechanism 15 of the wheelchair transporter 10 includes right and left extendable and retractable hitch members 35 to connect and disconnect the wheelchair transporter 10 with the wheelchair 5. The extension and retraction of the right and left hitch members 35 is controlled by the operator 17 through a hitch control lever 30 located just below the right end portion of the handlebar 160, as shown in Figs. 4 and 7. The hitch control lever 30 is pivotally coupled with the body 110 of the wheelchair transporter 10. As discussed in more detail below, the hitch control lever 30 is also coupled with the hitch mechanism 15 through a hitch linkage assembly 206. In some embodiments of the wheelchair transporter 10, the hitch control lever 30 includes a positive locking feature 701 that prevents hitch mechanism 15 from inadvertently disengaging from a wheelchair 5. More particularly, the positive locking feature 701 prevents the hitch control lever 30 from moving in response to forces exerted on it by the hitch linkage assembly 206 (see Figs. 13 and 23).

As shown in Figs. 23-25, in one embodiment, the wheelchair transporter 10 includes a hitch control lever 30 that is part of the hitch linkage assembly 206 and a positive locking mechanism 701 that is part of a locking/release mechanism 702. Although the wheelchair transporter 10 is equipped with hitch control lever 30 and a lock release handle 703 that are operated with an operator's hand, it is to be appreciated that other embodiments of the wheelchair transporter 10 can be configured with a hitch control lever 30 and/or lock release handle 703 that can be operated with a person's foot.

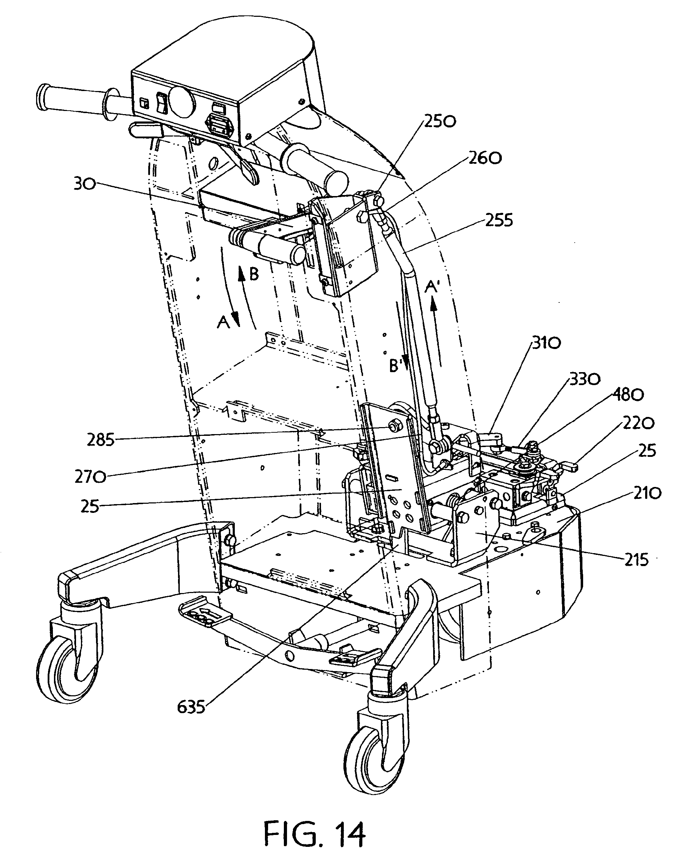

As indicated in Figs. 14 and 23-25, in one embodiment, the components of the hitch linkage assembly 206 and locking/release mechanism 702 extend between the handle area of the transporter 10 and the hitch mechanism 15. The components of the hitch linkage assembly 206 and the arrangement of the components are discussed in detail in other locations within this Detailed Discussion.

As shown in Fig. 23, the locking/release mechanism 702 includes a handle assembly 704 near the handle 245 of the hitch control lever 30, a positive locking mechanism 701 on the hitch mechanism 15, and a control cable 705 extending between the handle assembly 704 and the locking mechanism 701. Via the cable 705, operation of the release handle 703 of the handle assembly 704 causes the locking mechanism 701 to release, thereby allowing the hitch to disengage a wheelchair.

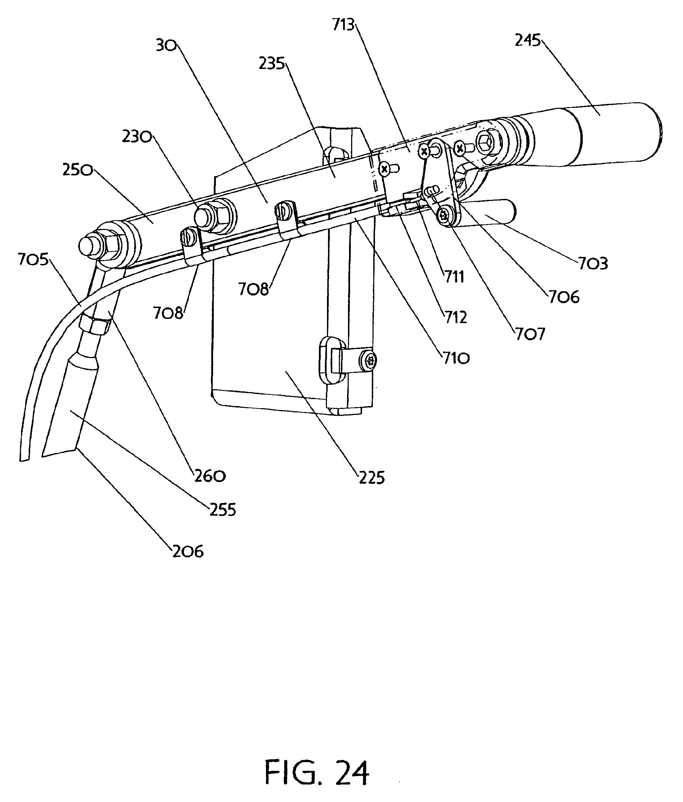

As illustrated in Fig. 24, the handle assembly 704 of the locking mechanism 701 includes a cable 705 and a lever arm 706 with a release handle 703 extending therefrom. The lever arm 706 is pivotally mounted off of the hitch control lever 30 near the handle 245 of the lever 30. The upper end of the cable 705 includes a z-fitting 707 that is received in an opening of the lever arm 706. The cable 705 includes an outer jacket 710 or shield through which a cable core 711 is slidably displaceable within the outer shield 710. The z-fitting 707 is an extension of the cable core, or at least coupled to the cable core, such that pivoting of the lever arm 706 relative to the lever 30 causes the cable core to slidably displace within the shield, which is coupled to the lever 30 via clasps 708. The extreme upper end of the shield 710 is additionally fixed to the lever 30 via a notch 712 in a release cover 713. Accordingly, via the notch 712 and clasps 708, the shield 710 is held in place as the core 711 slidably displaces within the shield 710 to cause the locking mechanism 701 to release. Pivoting the lever arm 706 relative to the hitch control lever 30 causes the core 711 to slidably displace within the cable shield 710.

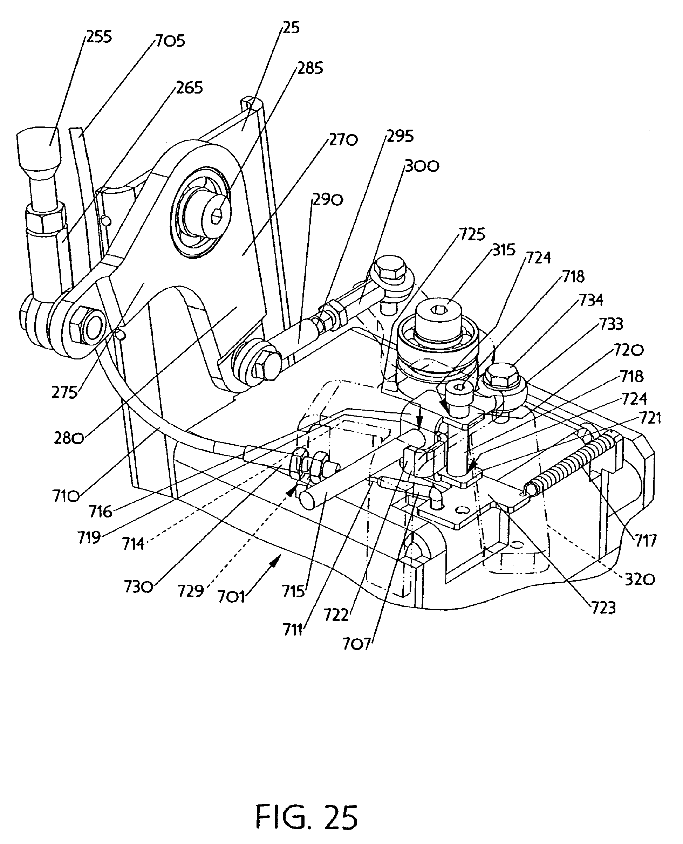

As shown in Fig. 25, the locking mechanism 701 is mounted on a locking bracket support 714 (shown in phantom lines) of the hitch assembly 30. The locking mechanism 701 includes a locking rod 715, a locking bracket 716, a bracket spring 717, a bracket pivot pin 718, and the lower end of the cable 705. The bracket 716 includes a vertical rod receiving portion 719, upper and lower horizontal pin receiving portions 720, 721, a pivot limiter portion 722, and a lever arm portion 723. The vertical portion 719 vertically extends between the upper and lower portions 720, 721 and includes a hole 725 through which the locking rod 715 extends. The upper and lower portions 720, 721 each extend generally horizontal and each include a pin hole 724 through which the pivot pin 718 is received to pivotally couple the bracket 716 to the bracket support 714. The lever arm portion 723 extends generally horizontally from the lower portion 721. The pivot limiter 722 extends from a vertical side of the vertical portion 719 and curves back towards the locking rod 715.

The lower end of the cable 705, and more specifically, the lower end of the cable core 711 includes a z-fitting 707, which is an extension of the core itself or coupled to the core 711. The z-fitting is received in an opening in a first portion of the bracket lever portion 723, and the spring 717 extends between an opening in a second portion of the bracket lever portion 723 and a connection to the hitch base mount 415. In a similar fashion to the upper portion of the cable 705, the cable shield 710 is coupled to a slot 729 in the bracket support 714. Specifically, a threaded fitting 730 extends from the shield 710 and is received in the slot 729. As a result, the cable core 711 can slidably displace within the shield 710 to cause the bracket 716 to pivot about the pin 718.

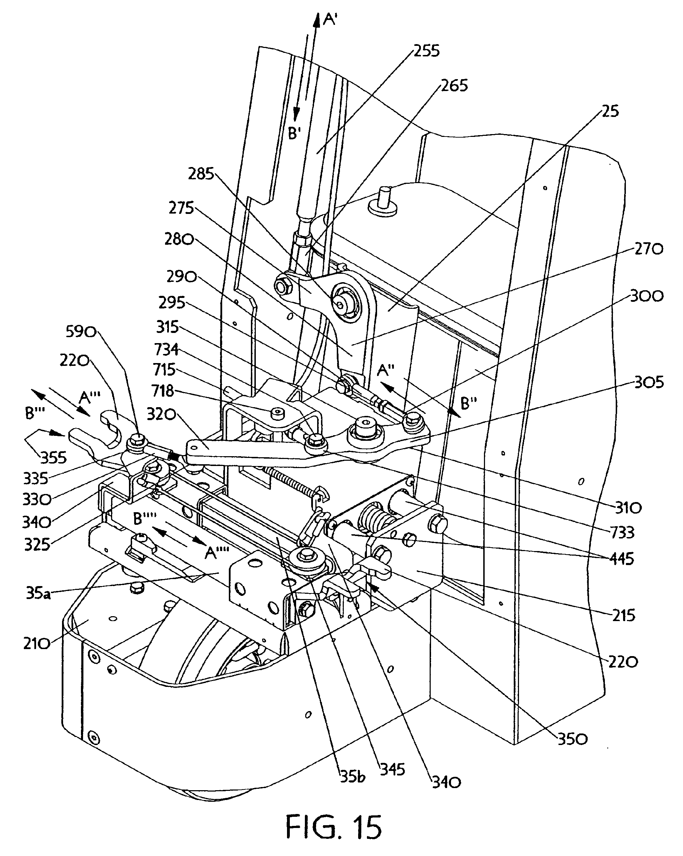

One end of the locking rod 715 includes a ball end joint 733. As indicated in Figs. 15 and 25, a pivot pin or bolt 734 is pivotally received in the ball end joint 733 to pivotally couple the ball end joint 733 to a second end portion 320 of the lever arm 310 between the lever arm axle 315 and the end of the second end portion 320.

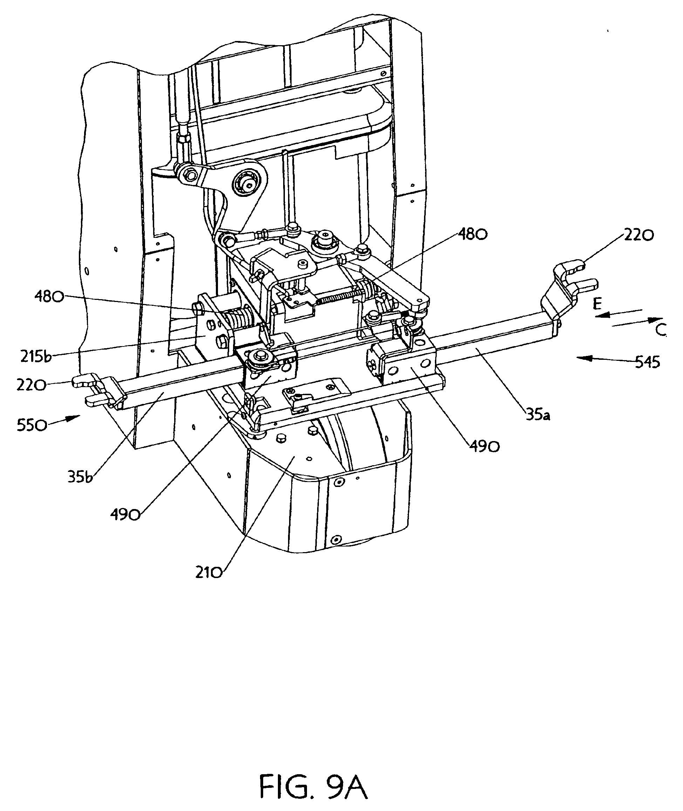

As can be understood from Figs. 9A-10B, 15 and 23-25, the locking rod 715 slides through the locking bracket hole 725 when the hitch members 35a, 35b are extended or retracted. The locking bracket is hardened and its hole 725 has relatively sharp edges. The spring 717 biases the bracket 716 about the pivot pin 718 such that the axis of the hole 725 does not align with the axis of the rod 715, thereby causing the edges of the hole 725 to bindingly engage with the surface of the rod 715. The biasing action of the spring 717 results in positive engagement of the bracket 716 with the rod 715. To not interfere with the positive engagement of the bracket hole 725 with the rod 715, the cable 705 is provided with a small amount of slack so the spring 717 is completely free to bias the bracket hole 725 into solid contact with the rod 715.

A downward motion of the lever 30 moves the hitch members 35a, 35b outward, sliding the locking rod 715 through the locking bracket hole 725 to a new position. Any inward force on the hitch members 35a, 35b simply increases the locking (i.e., binding) force between the rod 715 and the sharp edges of the locking bracket hole 725. In this way, the hitch can lock at any position through its range of motion.

In one embodiment, the locking mechanism is very positive locking. As a result, to disengage the hitch members 35a, 35b from a wheelchair frame to release the wheelchair, the operator pushes down slightly on the lever 30 to remove some of the locking force. The operator then pulls the release handle 703 towards the handle 245 to place tension on the cable core 711 and cause the bracket 716 to pivot about the pin 718 so the axis of the bracket hole 725 aligns with the axis of the rod 715. The alignment of the hole and rod axes eliminates the bind between the hole edges and rod, thereby allowing the rod to displace within the bracket hole and freeing the hitch members 35a, 35b to converge and disengage from the wheelchair frame. The free end of the pivot limit 722 encounters the side of the rod 715 to prevent the bracket 716 from overly pivoting about the pin 718, on account of the cable pull, and binding with the bracket hole 725 in an opposite direction. When the hitch members 35a, 35b are fully retracted, the operator lets go of the release handle 703 and the spring 717 biases the bracket hole 725 back into positive engagement with the rod 715. The hitch members 35a, 35b are now ready for engagement with another wheelchair.

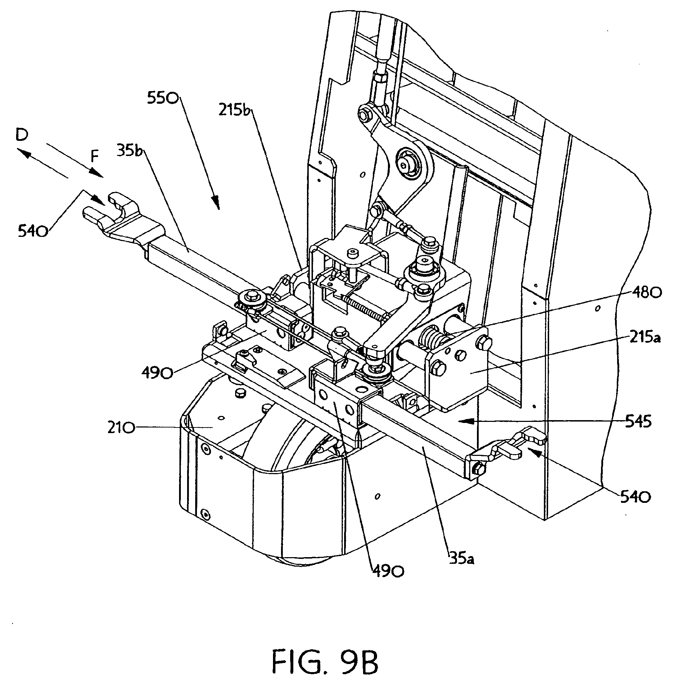

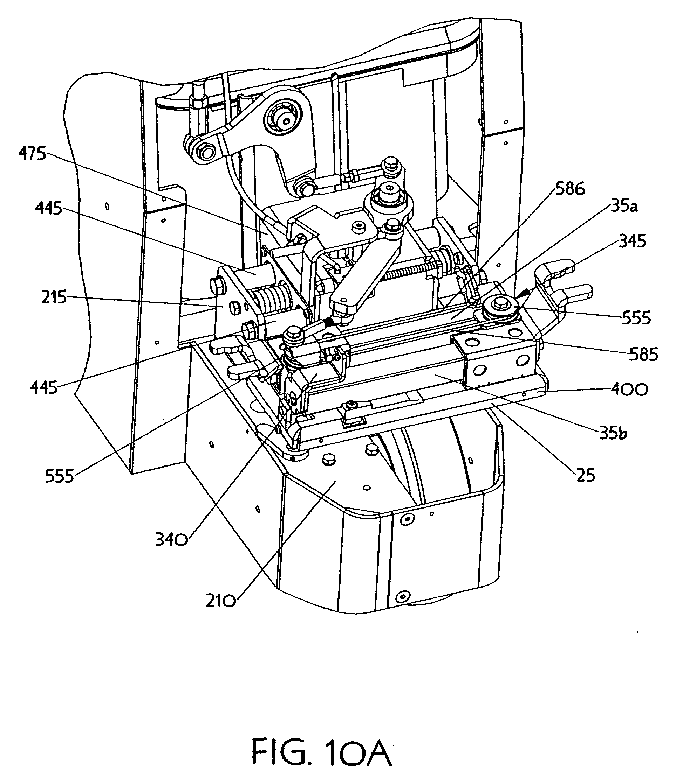

As discussed in more detail below, the outer end portions of the hitch members 35 are configured to engage various parts on the wheelchair 5 to connect the wheelchair transporter 10 with the wheelchair 5 when the hitch members 35 are extended. To extend the right and left hitch members 35, the operator 17 moves the hitch control lever 30 downward (direction A in Fig. 14). Figs. 9A and 9B show the right and left hitch members 35 in an extended position. To retract the hitch members 35, the operator 17 moves the hitch control lever 30 upward (direction B in Fig. 14). Figs. 10A-10B show the right and left hitch members 35 in a retracted position. To connect the wheelchair transporter 10 with the wheelchair 5, the operator 17 maneuvers the hitch mechanism 15 under the seat portion 55a of the wheelchair 5, as shown in Fig. 11. Once the wheelchair transporter 10 is in position, the operator 17 moves the hitch control lever 30 downward (direction A in Fig. 14), which in turn, extends the right and left hitch members 35 outward and into engagement with the wheelchair 5.

Fig. 12 shows a detailed view of the hitch mechanism 15 connected with a wheelchair 5. The right and left hitch members 35 are extended with outward end portions engaged with the right and left rear upright members 95 of the wheelchair frame 60. To disconnect the wheelchair transporter 10 from the wheelchair 5, the operator 17 moves the hitch control lever 30 upward (direction B in Fig. 14), which retracts the right and left hitch members 35 and disengages the outer end portions from the wheelchair frame 60. Although Fig. 12 illustrates particular connection points between the hitch members 35 and the wheelchair frame 60, it is to be appreciated that the hitch members 35 can connect with other locations on the wheelchair 5. For example, with reference to Figs. 1-3, the hitch members 35 are adapted to connect with the rear upright members 95, the lower members 80, and/or the cross members 75 of the wheelchair frame 60. Other connection points can include rear wheel axles 100 and associated axle studs on the wheelchair 5. In addition, the hitch mechanism 15 can be configured to connect with wheelchairs 5 having different widths. For example, one embodiment of the hitch mechanism 15 is adapted to connect with standard wheelchairs 5 having widths of 14 to 24 inches as well as bariatric wheelchairs 5 having widths of 20 to 34 inches.

While the previous discussion discloses an embodiment wherein the right and left hitch members 35 extend outward to engage the structure of a wheelchair 5, it should be appreciated that in another embodiment the right and left hitch members 35 are retracted to engage the structure of the wheelchair 5. For instance, in such a retractable-engagement configuration, hook-like or bracket-like features, which open towards each other in an opposed fashion, engage the structure of the wheelchair 5 when the right and left hitch members 35 are retracted towards each other. To disengage the hook-like or bracket-like features from the structure of the wheelchair 5, the right and left hitch members 35 are extended away from each other.

As previously mentioned with respect to the embodiment wherein the left and right hitch members 35 extend away from each other to engage the structure of the wheelchair 5, the hitch control lever 30 controls the retraction and extension of the hitch members 35 and is coupled with the hitch mechanism 15 through the hitch linkage assembly 206. As shown in Figs. 13-15, 23, 24 and others, the hitch control lever 30 is pivotally coupled with a control lever support member 225 through a control lever axle 230. The control lever support member 225 is supported inside the body 110 of the wheelchair transporter 10 near an intersection of the rear and right sides 110b, 110c. A first end portion 235 of the hitch control lever 30 extends rearwardly from the control lever support member 225 through a slot 240 (see Fig. 4) in the rear side 110b of the wheelchair transporter body 110. Referring particularly to Fig. 13 and Fig. 24, a cylindrical-shaped handle 245 tapers slightly and is connected with the first end 235 of the hitch control lever 30. A second end portion 250 of the hitch control lever 30 extends forwardly from the control lever axle 230 toward the inner surface of the front side 110a of the wheelchair transporter body 110.

As shown in Figs. 13-15, the hitch linkage assembly 206 includes an upper link 255 having an upper end portion 260 pivotally connected with the second end portion 250 of the hitch control lever 30. From the pivotal connection with the control hitch lever 30, the upper link 255 extends downwardly and adjacent to the front side 110a of the wheelchair transporter body 110. A lower end portion 265 of the upper link 255 is pivotally coupled with a bell crank member 270, which in turn, is rotatably connected with the hitch base 25. More particularly, the bell crank member 270 is substantially L-shaped and is defined by a first end portion 275 connected with a second end portion 280. The first end portion 275 of the bell crank 270 is pivotally connected with the lower end portion 265 of the upper link 255. The intersection of the first and second portions 275, 280 of the bell crank member 270 is rotatably coupled with the hitch base 25 through a bell crank axle 285.

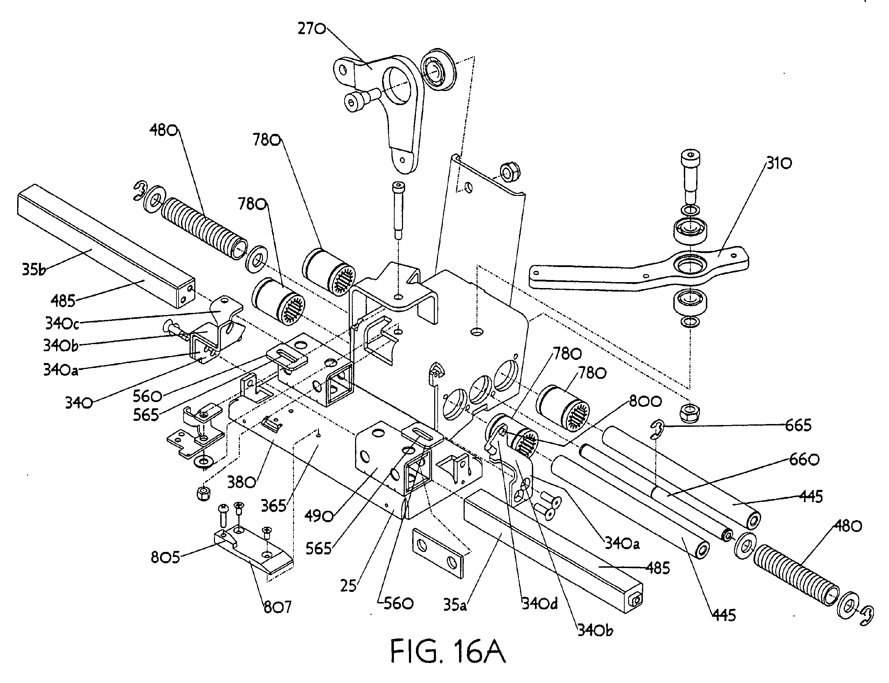

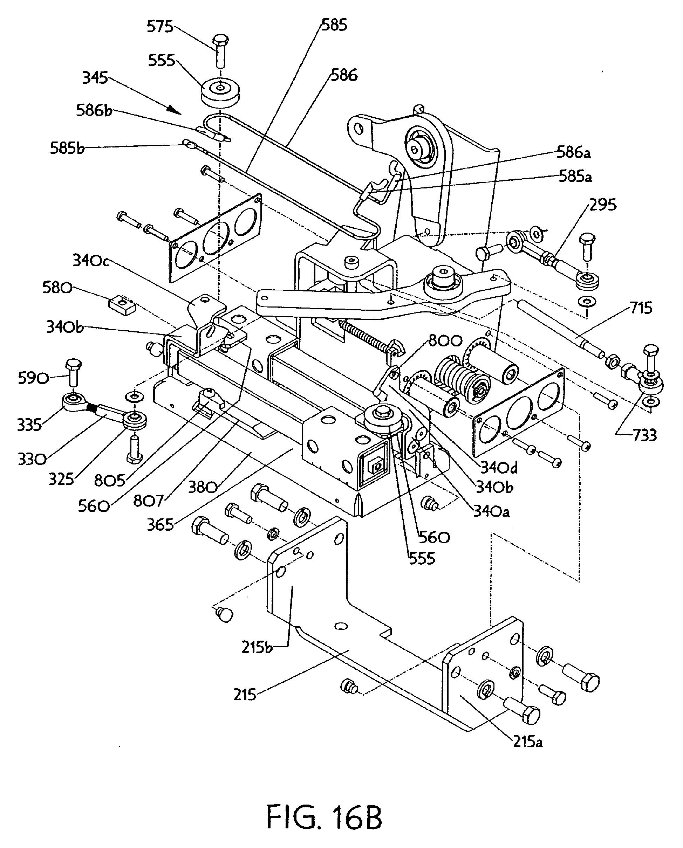

As described in more detail below with reference to Figs. 15, 16A and 16B and others, the hitch base 25 is slidingly coupled with the wheelchair transporter body 110 and acts to support the hitch mechanism 15. The second end portion 280 of the bell crank member 270 is pivotally connected with a first end portion 290 of a lower link 295. The lower link 295 extends leftward to a second end portion 300 pivotally connected with a first end portion 305 of a lever arm 310. As shown in Fig. 15, the lever arm 310 is rotatably coupled with the hitch base 25 through a lever arm axle 315. From the lever arm axle 315, the lever arm 310 extends forward and rightward to a portion connected to a locking rod 715 with a locking rod ball end joint 733. From the portion connected to the locking rod 715, the lever arm 310 extends forward and rightward to a second end portion 320 pivotally connected with a first end portion 325 of a connecting lever 330. As discussed in more detail below, the connecting lever 330 extends rightward to a second end portion 335 pivotally coupled with the left hitch member 35a via the left hitch bracket 340.

It is to be appreciated that the shapes and sizes of the various links and levers should not be limited to what is depicted and described herein. For example, the lengths of the links and levers can be configured to allow easier integration of these components into the wheelchair transporter body 110. In addition, the hitch linkage assembly 206 and hitch mechanism 15 can be configured such that the motion of the hitch control lever 30 and the hitch members 35 is mostly linear and to amplify the relative motion between the hitch control lever 30 and hitch members 35. Further, the pivotal connections between the various links and levers in the wheelchair transporter 10 can be configured in various ways. For example, as shown in Fig. 14, the upper and lower end portions 260, 265 of the upper link 255 includes ball end joints connected thereto that pivotally connect with the hitch control lever 30 and bell crank member 270, respectively. Other embodiments utilize bronze bushings to protect pivoting joints and thrust washers to protect sliding joints.

The movements of the hitch control handle 30 to extend and retract the hitch members 35 are described below with respect to the structure of the hitch linkage assembly 206 described above.

To move the right hitch member 35b and left hitch member 35a to the extended position (as shown in Figs. 9A and 9B), the operator 17 moves the first end portion 235 of the hitch control lever 30 downward (direction A in Fig. 14), which pivots the hitch control lever 30 counterclockwise (as viewed from the right side of the wheelchair transporter 10) about the control lever axle 230. As the hitch control lever 30 pivots counterclockwise, the second end portion 250 of the hitch control lever 30 pulls upward on the upper end portion 260 of the upper link 255. As the upper link 255 moves upward (direction A' in Figs. 14 and 15), the bell crank member 270 rotates clockwise (as viewed from the front of the wheelchair transporter 10) about the bell crank axle 285. Clockwise rotation of the bell crank member 270 pulls the lower link 295 substantially rightward (direction A" in Fig. 15). Movement of the lower link 295 in direction A" pulls on the first end portion 305 of the lever arm 310, which causes the lever arm 310 to rotate counterclockwise (as viewed from the top of the wheelchair transporter 10) about the lever arm axle 315. Counterclockwise rotation of the lever arm 310 pulls the connecting lever 330 substantially leftward (direction A"' in Fig. 15) and causes the rod 715 to displace leftward through the bracket hole 725. Movement of the connecting lever 330 in direction A"', in turn, moves the left hitch member 35a in a leftward direction (direction A"" in Fig. 15), causing the left hitch member 35a to extend outward from the hitch mechanism 15, as shown in Figs. 9A and 9B. As described in more detail below, the right hitch members 35b and left hitch member 35a are coupled together through a cable-pulley assembly 345 such that movement of the left linkage assembly 350 in one direction causes the right linkage assembly 355 to move in an opposite direction. As such, extension of the left hitch member 35a causes the right hitch member 35b to extend.

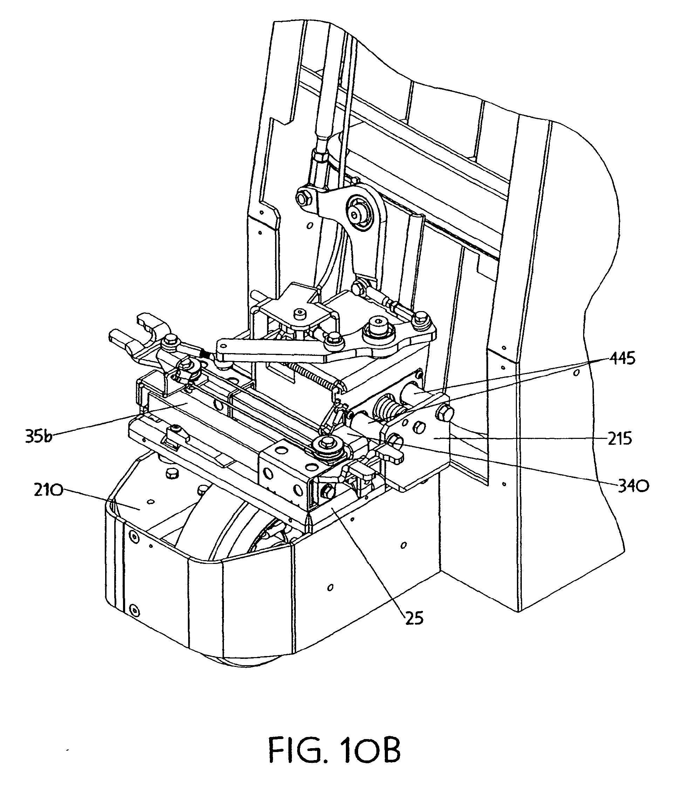

To move the right hitch member 35b and left hitch member 35a to the retracted position (as shown in Figs. 10A and 10B), the operator 17 moves the first end portion 235 of the hitch control lever 30 upward (direction B in Fig. 14), which pivots the hitch control lever 30 clockwise (as viewed from the right side of the wheelchair transporter 10) about the control lever axle 230. As the hitch control lever 30 pivots clockwise, the second end portion 250 of the hitch control lever 30 pushes downward on the upper end portion 260 of the upper link 255. As the upper link 255 moves downward (direction B' in Figs. 14 and 15), the bell crank member 270 rotates counterclockwise (as viewed from the front of the wheelchair transporter 10) about the bell crank axle 285. Counterclockwise rotation of the bell crank member 270 pushes the lower link 295 substantially leftward (direction B" in Fig. 15). Movement of the lower link 295 in direction B" pushes on the first end portion 305 of the lever arm 310, which causes the lever arm 310 to rotate clockwise (as viewed from the top of the wheelchair transporter 10) about the lever arm axle 315. Clockwise rotation of the lever arm 310 pushes the connecting lever 330 substantially rightward (direction B'" in Fig. 15) and causes the rod 715 to displace rightward through the bracket hole 725. Movement of the connecting lever 330 in direction B"', in turn, moves the left hitch member 35a in a rightward direction (direction B"" in Fig. 15), causing the left hitch member 35a to retract inward toward the hitch mechanism 15, as shown in Figs. 10A and 10B. As previously mentioned, the interconnection between the right hitch member 35b and left hitch member 35a causes the right hitch member 35b to retract along with the left hitch member 35a.

As shown in Figs. 8 and 13-17B, the hitch mechanism 15 is mounted on a hitch base 25 that is slidingly coupled with the wheelchair transporter body 110. More particularly, the base mount 215 extends upward from a base support 210 located to the right and rear of the front drive wheel 130 to support the hitch base 25 above the front drive wheel 130, as shown in Figs. 8 and 13-15. As described in more detail below with reference to Figs. 16-21B, the operator 17 of the wheelchair transporter 10 can selectively move the hitch base 25 and hitch mechanism 15 mounted thereon in either right or left directions relative to the rest of the transporter 10. The movement of the hitch base 25 in right or left directions is controlled by the operator 17 through the base control lever 45 located on the lower end portion of the rear side 110b of the wheelchair transporter 10, as shown in Fig. 4. The base control lever 45 is pivotally coupled with the body 110 of the wheelchair transporter 10 and is coupled with the hitch base 25 through a base linkage assembly 360.

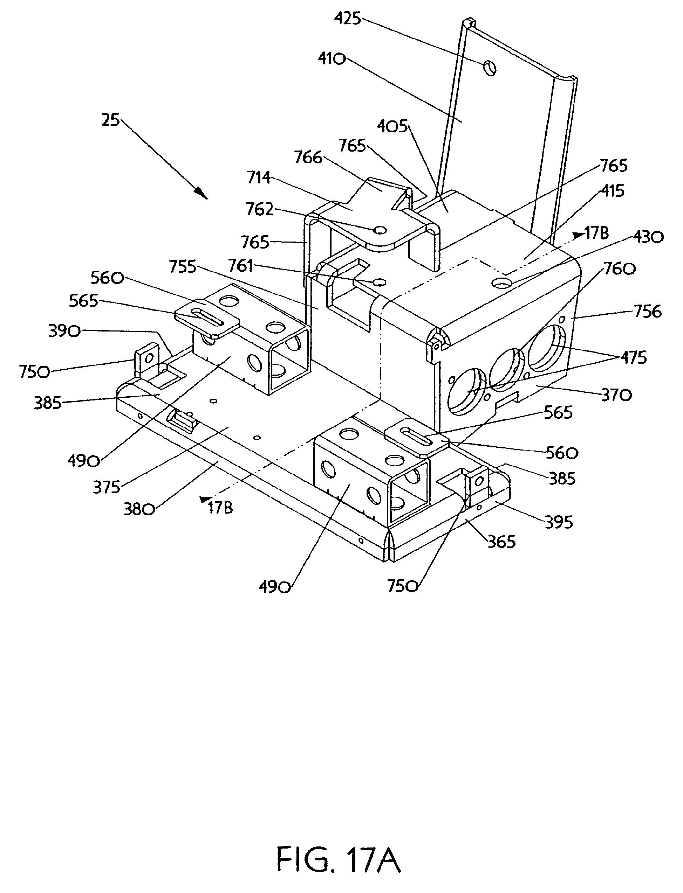

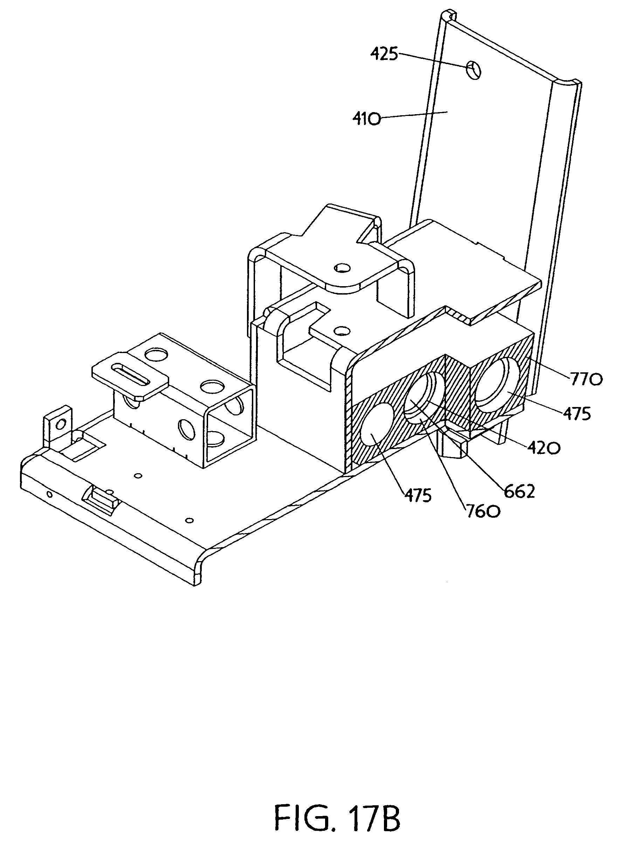

Figs. 17A and 17B show one embodiment of the hitch base 25, which includes a forward portion 365 and a rear portion 370. The forward portion 365 includes a main platform 375 defined by a front and rear edges 380, 385 connected with and separated by right and left edges 390, 395. The front and rear edges 380, 385 of the main platform 375 are substantially parallel to each other. The right and left edges 390, 395 extend forward from the rear edge 385 to connect with the front edge 380. As such, the main platform 375 is shaped substantially similar to a rectangle. Extending upward from the right and left edges 390, 395 of the main platform 375 are hitch member stoppers 750. A first hitch member stopper 750 located on the forward portion of the right edge 390 of the main platform 375 includes a single aperture, which is adapted to receive a rubber bumper. A second hitch member stopper 750 located on the rear portion of the left edge 395 of the main platform 375 includes a single aperture, which is adapted to receive a rubber bumper. The rubber bumper limits over travel of the hitch members 35a, 35b in the retracted position.

The rear portion 370 of the hitch base 25 is defined by a rear platform portion 405 connected with an upright portion 410, as shown in Fig. 17A. The rear platform portion 405 extends rearward from the rear edge 385 of the main platform portion 375. The upright portion 410 extends upward from the rear edge of the rear platform portion 405. The rear portion 330 is a four sided box defined by the upper platform 415 extending forward to a forward upright portion 755 and left and right side upright portions 756. The left and right side upright portions 756 each have three apertures, which are a spring aperture 760 and two base support collar apertures 475. As described in more detail below, inside the spring aperture 760 and extending radially inward is a lip 420 that acts as a centering plate 420. The upright portion 755 extends downward to the rear edge 385 of the main platform portion 375. The left and right side upright portions 756 extend upward towards the rear platform portion 405. An aperture 761 located near the junction of the upper platform 415 and an upright portion 755, is adapted to accommodate the pivot pin 718 of the locking bracket 716 to pivotally couple the bracket 716 to the platform 415.

Extending upward and from the center and right of the upper platform 415 is a locking bracket support 714 as discussed above with respect to Fig. 25. The locking bracket support 714 includes three leg portions 765 and an upper platform 766. The leg portions 765 extend upward from the platform 415 to an upper platform 766 of the bracket support. An aperture 762 located in the upper platform 766 is adapted to receive the locking bracket pivot bolt 718 to pivotally couple the bracket 716 to the platform 415. In one embodiment, a block 770 extends underneath the upper platform 405 between the sides 755, 756, 410 of the rear portion 370. The apertures 475, 760 extend through the block 770, and the lip or centering plate 420 is located at the center of the spring aperture 760.

Referring now to Figs. 14-17, a first aperture 425 located in the right side of the upright portion 410 is adapted to receive the bell crank axle 285. A second aperture 430 located in the upper platform 415 is adapted to receive the lever arm axle 315.

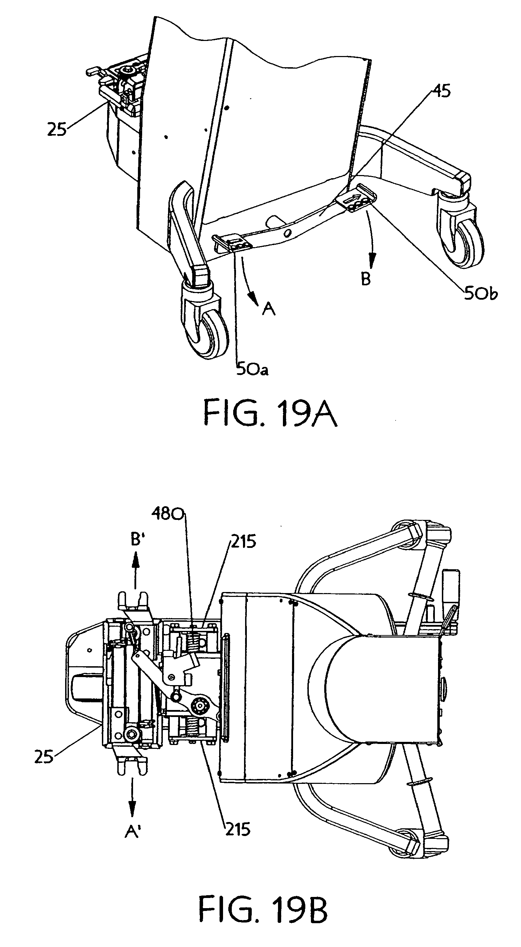

The hitch base 25 is supported by a base mount 215. The base mount 215 is a substantially flat platform with left and right upright portions 215a, 215b extending vertically upward therefrom. The left and right upright portions 215a, 215b couple to the ends of the base supports 445 and spring or slider pin 660 described below. The base mount 215 is coupled to the base support platform 210 and the four sided box of the rear portion 370 via the supports 445 and pin 660 such that the hitch base 25 can slide left or right relative to the wheelchair transporter 10. More particularly, as shown in Figs. 8 and 14-16B, the hitch base 25 is slidingly supported by a forward base support member 445 and a rear base support member 445 extending between the right and left upright portions 215a, 215b. As shown in Figs. 10A-10B, 16, 21B and others, the base mount 215 is bolted to the base support platform 210. The forward base support member and rear base support member 445 are connected with and extend between the right and left upright portions 215a, 215b of the base mount 215. The forward base support member and the rear base support members 445 have substantially round cross sections and are adapted to be slidingly received within the four sided box of the rear portion 370 by linear bearings 780. As described in more detail below, the operator 17 can selectively move the hitch base 25 back and forth in right and left directions by moving the hitch base control lever 45. As the hitch base 25 moves right or left, the hitch base 25 slides over the forward and rear base supports 445 via the linear bearings 780 located on both sides of the four sided box formed by the rear portion 370. Springs 480 extend over the spring member 660 and are each located between an upright portion 215a, 215b and the spring plate 420. Thus, when the hitch base 25 is deflected to the right or left, the springs 480 act between the upright 215a, 215b and the spring plate 420 to return the hitch base 25 to a mid position shown in Fig. 19B.

As previously mentioned, the hitch members 35 are mounted on the hitch base 25 and are adapted to extend and retract to connect with various parts of a wheelchair 5. As shown in Fig. 9B, the right hitch member 35b and left hitch member 35a each include a slider member 485 having a substantially square cross section. As discussed in more detail below, the slider members 485 are adapted to be slidingly received within right and left hitch collars 490 connected with the main platform 375 of the hitch base 25. The slider members 485 can optionally be extended with, for example, by the attachment of a sliding member extender of one inch or more to each slider member 485, thereby increasing the operating width of the hitch. As described above, hitch member stoppers 750 can be utilized to prevent over travel of the sliding members 485.

The left hitch member 35a includes a left catch member 220 connected with a left end portion of the slider member 485. The left catch member 220 extends upward and outward from the left hitch member 35a in an elongated S shape. At the top of the S shape, the catch member separates into two prongs, forming a U shape. The gap 540 between the two prongs of the U shape permits engagement with a wheelchair 5. The right hitch member 35b includes a right catch member 220 connected with a right end portion of the slider member 485. The right catch member 220 extends upward and outward from the right hitch member 35b in an elongated S shape. At the top of the S shape, the catch member separates into two prongs, forming a U shape. The gap 540 between the two prongs of the U shape permits engagement with a wheelchair 5.

The configuration and relative orientations of the several possible catch members 220 allow the right and left hitch members 35b, 35a to connect with different parts of the wheelchair 5. For example, the right and left hitch members 35b, 35a can be extended to engage upright extending members of the wheelchair frame 60 in the gap 540 between the two prongs of the catch member 220, as shown in Fig. 12. It can be appreciated that the configuration and relative orientation of other catch members may engage in several different locations of the wheelchair frame 60.

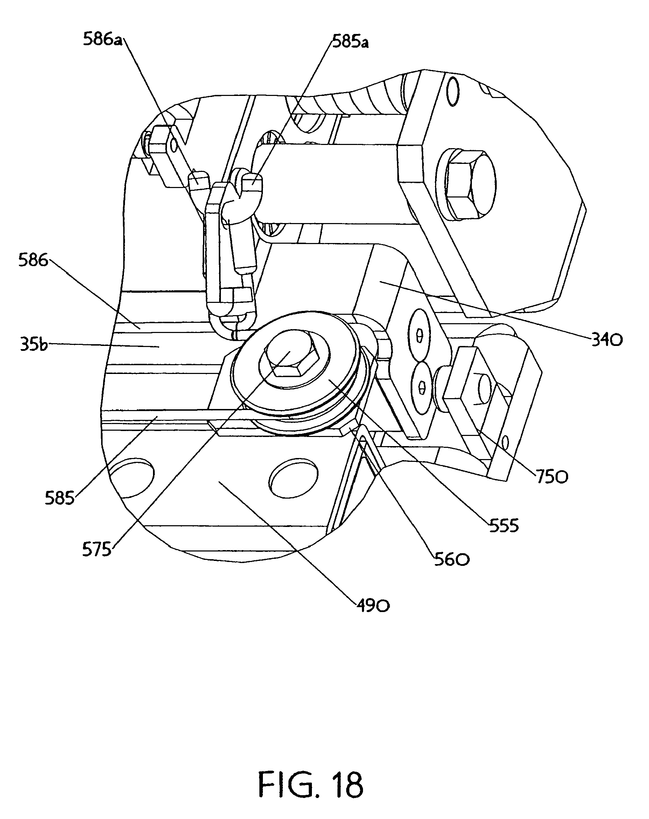

As previously mentioned, the right and left hitch members 35b, 35a are coupled together through the cable-pulley assembly 345 such that movement of the left linkage assembly 545 in one direction causes the right linkage assembly 550 to move an opposite direction. As shown in Figs. 16A-17A, the right and left hitch collars 490 on the hitch base 25 slidingly receive the slider members 485 of the right and left hitch members 35b, 35a, respectively. As shown in Figs. 16B and 18, the cable-pulley assembly 345 includes right and left pulleys 555 rotatably supported on right and left pulley support brackets 560. More particularly, the substantially rectangular-shaped left pulley support bracket 560 extends rearwardly from an intersection of top and rear sides of the left hitch collar 490. A pulley slot 565 extends substantially along the length of left pulley support bracket 560. The pulley slot 565 defines a substantially constant width along its length. As shown in Fig. 16A, 16B and 18, a left pulley axle 575 extends downward through the slot 565 and a center aperture in the left pulley 555. Similar to the left pulley support bracket 560, the substantially rectangular-shaped right pulley support bracket 560 extends forward from an intersection of top and rear sides of the right hitch collar 490. A pulley slot 565 extends substantially along the length of right pulley support bracket 560. The pulley slot 565 defines a substantially constant width along its length. As shown in Fig. 16A, 16B and 18, a right pulley axle 575 extends downward through the slot 565 and a center aperture in the right pulley 555.

As shown in Figs. 10A, 16A and 16B, and others, the cable-pulley assembly 345 includes forward and rear cables 585, 586 trained around the right and left pulleys 555 to couple the right and left hitch members 35 with each other. More particularly, opposing ends 585a, 585b, 586a, 586b of the forward and rear cables 585, 586 are connected with right and left hitch end brackets 340, which in turn, are connected to right and left slider members 485. With reference to Fig. 16A and 16B, the left hitch end bracket 340 is connected with a right end of the left slider member 485. The left hitch end bracket 340 includes an end portion 340a connected with an upper portion 340b. As shown in Fig. 16A and 16B, the end portion 340a of the left hitch end bracket 340 is bolted to the right end of the left slider member 485, and the upper portion 340b extends leftward adjacent to the top surface of the left slider member 485. An extension 340c extending upward from the upper portion 340b of the left hitch end bracket 340 defines a ledge having an aperture. The aperture is adapted to receive a bolt 590 that pivotally couples the second end portion 335 of the connecting lever 330 with the left hitch member 35a, as discussed above with reference to Fig. 15. With reference to Fig. 16A and 16B, the right hitch end bracket 340 is connected with a left end of the right slider member 485. The right hitch end bracket 340 includes an end portion 340a connected with upper portion 340b and a third portion 340d. As shown in Fig. 16A and 16B, the end portion 340a of the right hitch end bracket 340 is bolted to the left end of the right slider member 485, and the upper portion 340b extends rightward adjacent to the top surface of the right slider member 485. The third portion 340d extends upward from 340b and includes a cable pulley end slot 800. The cable pulley end slot 800 extends diagonally from the third portion 340d. As shown in FIG. 18, the cable pulley end slot 800 is adapted to receive cable pulley ends with cast z fittings 585a, 586a of the forward and rear cables 585, 586.

Referring now to Figs. 10A, 16A and 16B, from the first end portion attached to a cast z fitting 586a, the rear cable 586 extends rightward to the right pulley 555. The rear cable 586 extends around the right pulley 555 to a second end portion having a cast z fitting 586b. From the first end portion having a cast z fitting 585a of the forward cable 585, the forward cable 585 extends around the left pulley 555 and to a second end portion having a cast z fitting 585b. The cable pulley end slot 800 in the third portion 340d of the left hitch end bracket 340 connects second end portions 585b, 586b of the forward and rear cables 585, 586 with the left hitch end bracket 340, and in turn, the left hitch member 35a. Because the left and right hitch members 35b, 35a are coupled with each other through the previously described cable-pulley assembly 345, motion of one hitch member 35 is transferred through the cables to pull the other hitch member 35 in a symmetrically opposite direction.

It is to be appreciated that the cable-pulley assembly 345 can be configured differently, and should not be limited to that which is described and depicted herein. For example, some embodiments utilize high strength cable to allow the hitch members 35 to engage the wheelchair 5 with substantial force. In addition, the cable-pulley assembly 345 can utilize a single cable loop as opposed to two cables connected together. Instead of coupling the hitch members 35 together with cables, various types of chains such as roller chain or plastic strips such as those used for automotive window, could be utilized. Other embodiments of the wheelchair transporter 10 do utilize a cable-pulley assembly to provide opposite motion for the hitch members 35. For example, some embodiments utilize a bell crank linkage. Others utilize dual electric actuators coupled with the hitch members 35. Still other embodiments utilize a single electric motor 40 with an axial screw to extend and retract the hitch members 35. Still other mechanisms can be utilized to provide the symmetrically opposing movement of the hitch members 35, such as a rack and pinion arrangement. Such a mechanism can include a hand crank on the pinion gear adapted to engage gear teeth on the racks coupled with both hitch members 35. As opposed to a hand crank, an electric motor 40 on pinion gear can be coupled with the pinion gear.

The movements of the hitch control handle 30 to extend and retract the hitch members 35 are described below with respect to the structure of the hitch mechanism 15 described above. As described above with reference to Figs. 9A, 9B, 14, and 15, the operator 17 moves the first end portion 235 of the hitch control lever 30 downward (direction A in Fig. 14) to move the right and left hitch members 35 to the extended position (as shown in Figs. 9A and 9B). As described above, movement of the hitch control handle 30 downward causes the connecting lever 330 to be pulled in a substantially leftward direction (direction A"' in Fig. 15). As previously discussed, the second end portion 335 of the connecting lever 330 is pivotally connected with left hitch end bracket 340. As such, the connecting lever 30 pulls the left hitch end bracket 340 in a leftward direction, which in turn, causes the left slider member 485 to slide leftward (direction C in Fig. 9A) through the left hitch collar 490. As the left hitch member 35a moves leftward, the left hitch end bracket 340 pulls the second end portion 586b of the rear cable 586 in the leftward direction. As the second end portion 586b of the rear cable 586 is pulled leftward, the right pulley 555 rotates counterclockwise (as viewed from the top of the wheelchair transporter 10) and the first end portion 586a of the rear cable 586 pulls on the right hitch end bracket 340. The first end portion 586a of the rear cable 586 pulling on the right hitch end bracket 340, causes the right hitch end bracket 340 and right slider member 485 to slide rightward (direction D in Fig. 9B) through the right hitch collar 490. As the right hitch member 35b moves rightward, the right hitch end bracket 340 pulls the first end portion 585a of the forward cable 585 in the rightward direction. As the first end portion 585a of the forward cable 585 is pulled rightward, the left pulley 555 rotates counterclockwise (as viewed from the top of the wheelchair transporter 10) and the second end portion 585b of the forward cable 585 pulls on the left hitch end bracket 340, which prevents slack from gathering in the forward cable 585. As shown in Figs. 9A and 9B, the right and left hitch end brackets 340 help limit the movement of the hitch members 35 in the extended position. More particularly, the right and left hitch end brackets 340 engage the right and left hitch collars 490, respectively, to prevent the right and left hitch members 35 from sliding completely through the hitch collars 490.

As shown in Figs. 15, 16A and 16B, the sliding member support plate ledge 805 of a sliding member support plate 807 guides the left hitch member 35a during retraction. Specifically, the sliding member support plate ledge 805 guides the left hitch member 35a in a linear path as it travels from an extended position to a retracted position. The support plate is coupled to the top surface of the forward portion 365 of the platform 25, near the front edge 380.

As described above with reference to Figs. 9A, 9B, 14, and 15, the operator 17 moves the first end portion of the hitch control lever 30 upward (direction B in Fig. 14) to move the right and left hitch members 35 to the retracted position (as shown in Figs. 10A and 10B). Movement of the hitch control handle 30 upward causes the connecting lever 330 to be pushed in a substantially rightward direction (direction B"' in Fig. 15). As previously discussed, the second end portion 335 of the connecting lever 330 is pivotally connected with left hitch end bracket 340. As such, the connecting lever 330 pushes the left hitch end bracket 340 in a rightward direction, which in turn, causes the left slider member 485 to slide rightward (direction E in Fig. 9A) through the left hitch collar 490. As the left hitch member 35a moves rightward, the left hitch end bracket 340 pulls the second end portion 585b of the forward cable 585 in the rightward direction. As the second end portion 585b of the forward cable 585 is pulled rightward, the left pulley 555 rotates clockwise (as viewed from the top of the wheelchair transporter 10), and the first end portion 585a of the forward cable 585 pulls on the right hitch end bracket 340. The first end portion 585a of the forward cable 585 pulling on the right hitch end bracket 340 causes the right slider member 485 to slide leftward (direction F in Fig. 15) through the right hitch collar 490. As the right hitch member 35b moves leftward, the right hitch end bracket 340 pulls the first end portion 586a of the rear cable 586 in the leftward direction. As the first end portion 586a of the rear cable is pulled leftward, the left pulley 555 rotates clockwise (as viewed from the top of the wheelchair transporter 10) and the second end portion 586b of the rear cable 586 pulls on the left hitch end bracket 340, which prevents slack from gathering in the rear cable 586. As shown in Figs. 10A and 10B, the right and left hitch member stoppers 750 help limit the movement of the hitch members 35 in the retracted position. More particularly, as can be understood from Fig. 18, the right hitch member bracket 340 encounters the left hitch member stopper 750 to prevent the right hitch member from sliding completely through the right hitch collar 490 in the retracted position. Similarly, the left hitch member bracket 340 encounters the right hitch member stopper 750 to prevent the left hitch member from sliding completely through the left hitch collar 490 in the retracted position.

As previously mentioned, the operator 17 of the wheelchair transporter 10 can selectively move the hitch base 25 and hitch mechanism 15 mounted thereon in either right or left directions. The ability to move the hitch base 25 right or left allows an operator 17 to more easily maneuver around various objects 20, 21 when connecting and disconnecting the wheelchair transporter 10 with a wheelchair 5 without having to steer the entire wheelchair transporter 10 into position. For example, some wheelchair accessories 20, 21, such as an oxygen bottle 20 or an IV pole 21 as shown in Fig. 2, may present an obstacle to operator 17 while attempting to connect or disconnect the wheelchair transporter 10 with the wheelchair 5. In one scenario, the operator 17 can move the hitch base 25 in a rightward direction to avoid contact with the oxygen bottle 20 while at the same time moving the hitch mechanism 15 forward into position under the seat portion 55a of the wheelchair 5. In another scenario, the operator 17 can move the hitch base 25 in a rightward direction to avoid contact with the IV pole 21 while at the same time moving the hitch mechanism 15 forward into position under the seat portion 55a of the wheelchair 5.

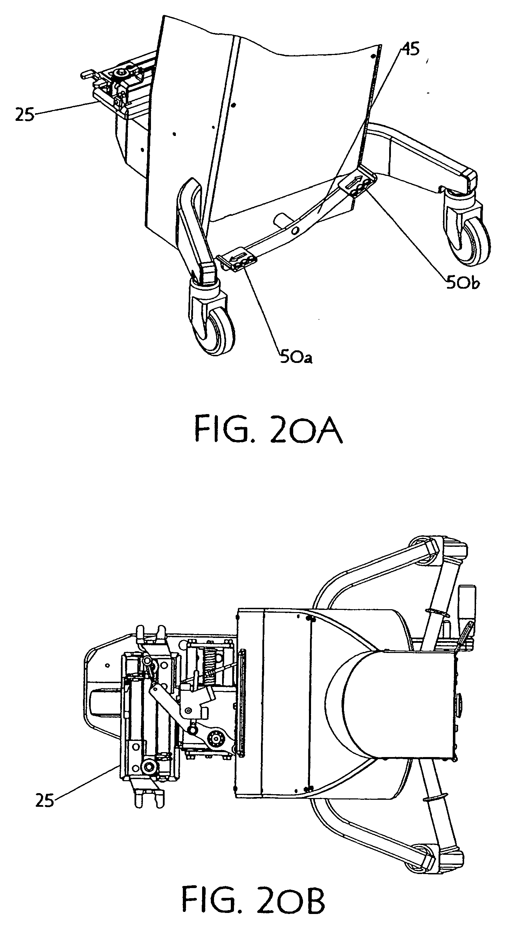

As discussed in more detail below, the hitch base 25 can be moved right or left by the operator 17 utilizing the hitch base control lever 45. More particularly, to move the hitch base 25 leftward (direction A' in Fig. 19B) from a first position, such as a substantially centered position shown in Fig. 19B, the operator 17 moves a left end portion 50a of the base control lever 45 downward (direction A in Fig. 19A). Figs. 20A and 20B show the hitch base 25 moved to a leftward position. To move the hitch base 25 rightward (direction B' in Fig. 19B), the operator 17 moves a right end 50b portion of the hitch base control lever 45 downward (direction B in Fig. 19A). As discussed in more detail below, once the operator 17 releases the base control lever 45, springs 480 engaging the hitch base 25 act to automatically return the hitch base 25 to the substantially centered position shown in Figs. 19A and 19B.

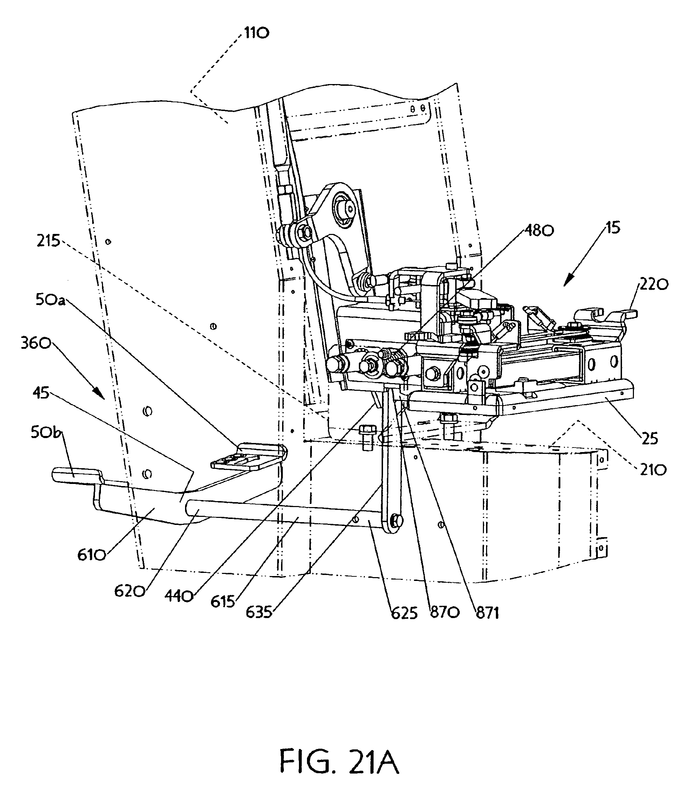

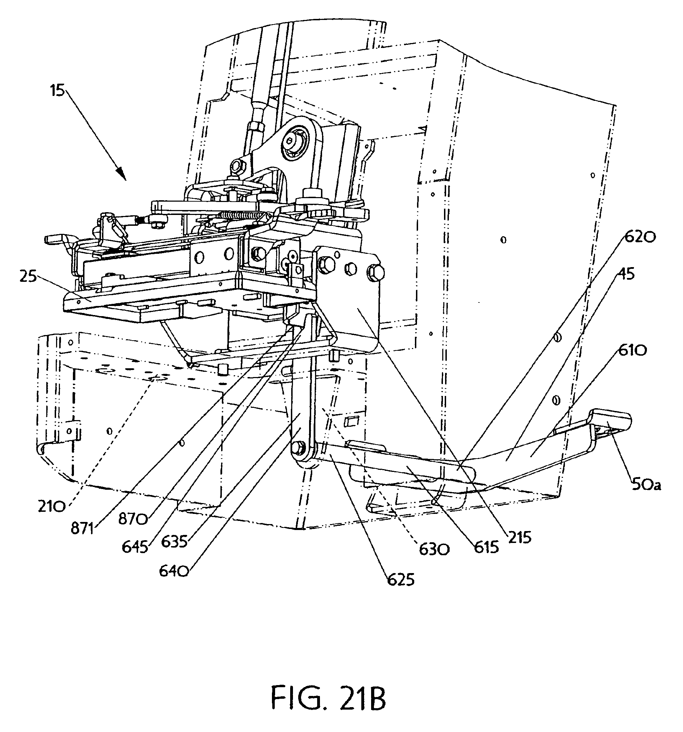

As previously mentioned, the movement of the hitch base 25 is controlled by the operator 17 through the base control lever 45 located on the lower end portion of the rear side of the wheelchair transporter 10, as shown in Fig. 4. The base control lever 45 is pivotally coupled with the body 110 (shown in phantom line in Figs. 21A and 21B) of the wheelchair transporter 10 and is coupled with the hitch base 25 through the base linkage assembly 360 shown in Figs. 21A-21B. The base control lever 45 includes a foot lever member 610 connected with a tie-rod 615. Footpads 50 are located at opposing end portions of the foot lever member 610. The foot lever member extends along the rear side 110b of the wheelchair transporter body 110. From a rear end portion 620 connected with the foot lever member 610, the tie-rod 615 extends forward through an aperture in the rear side 110b of the wheelchair transporter body 110 to a forward end portion 625. As shown in Fig. 21B, the forward end portion 625 of the tie-rod 615 extends through an aperture in a rod support bracket 630 (shown in phantom line) extending downward from the bottom side of the base support 210 (shown in phantom line). As such, the extension of the tie-rod 615 through the rear side 110b of the wheelchair transporter body 110 and the rod support bracket 630 pivotally couples the base control lever 45 with the wheelchair transporter 10. Although the wheelchair transporter 10 is equipped with base control lever 45 that is operated with an operator's foot, it is to be appreciated that other embodiments of the wheelchair transporter 10 can be configured with a handle to allow the operator 17 to move the base control lever 45 with his hand. Also, in other embodiments, the handle and base control lever 45 are replaced with a motorized actuator adapted to cause the hitch assembly 15 to displace right and left as directed by an electrical control mounted on the body 110 if the wheelchair transporter 10.

As shown in Figs. 21A and 21B, the hitch base linkage assembly 360 includes an upright lever 635 having a lower end portion 640 fixedly connected with the forward end portion 625 of the tie-rod 615 extending from the hitch base control lever 45. From the tie-rod 615, the upright lever 635 extends upwardly to an upper end portion 645, which has a gap 870 defined therein. The gap 870 receives a tab or center plate 871. When the upright lever 635 is rotated to the left or the right, the upright lever 635 pushes the center plate 871, thereby moving the hitch base 25.

As discussed above with reference to Figs. 8 and 14-16, and shown in Fig. 21B, the hitch base 25 is slidingly supported above the base support 210 by the base mount 215 and the forward and rear base support members 445 extending between the right and left upright portions 215b, 215a of the base mount 215. To move the hitch base 25 from the mid position (as shown in Figs. 19A-19B) to a leftward position (as shown in Figs.20A-20B), the operator 17 moves the left end portion 50a of the base control lever 45 downward (direction A in Fig. 19A), which pivots the base control lever 45 and tie-rod 615 counterclockwise (as viewed from the rear side of the wheelchair transporter 10). As described above, the base control lever 45 is located at the lower end portion of the rear side 110b of the wheelchair transporter body 110, and as such, the operator 17 can move the left end portion 50a of the hitch base 25 downward by stepping on the left footpad 50a with his foot. As the base control lever 45 and tie-rod 615 pivot counterclockwise, the upper end portion 645 of the upright lever 635, which is engaged with the center plate 871, moves the plate 871 to push the hitch base 25 in the leftward direction (direction A' in Fig. 19B). As the hitch base 25 moves left, the base 25 via the bearings 780, slides along the length of the rear and forward base support members 445.

To move the hitch base 25 from the mid position (shown in Figs. 19A-19B) to a rightward position, the operator 17 moves the right end portion 50b of the base control lever 45 downward (direction B in Fig. 19A), which pivots the base control lever 45 and tie-rod 615 clockwise (as viewed from the rear side of the wheelchair transporter 10). As previously mentioned, the operator 17 can move the right end portion 50b of the base control lever 45 downward by stepping on the right footpad 50b with his foot. As the base control lever 45 and tie-rod 615 pivot clockwise, the upper end portion 645 of the upright lever 635, which is engaged with the center plate 871, moves the plate 871 to push the hitch base 25 in a rightward direction (direction B' in Fig. 20B). As the hitch base 25 moves right, the base 25, via the bearings 780, slides along the length of the rear and forward base support members 445..

As previously mentioned, the wheelchair transporter 10 includes springs 480 that act to return and maintain the hitch base 25 in the mid position shown in Fig. 19B once the operator 17 releases the hitch base control lever 45. As shown in Figs. 16, 19B, 20B, and others, right and left springs 480 are supported between the right and left upright portions 215b, 215a and the spring plate 420. As shown in Fig. 16A and 16B, the right and left springs 480 are coil springs adapted to receive a slider pin 660. A right end portion of the right slider pin 660 is bolted to the right upright portion 215b, the middle portion of the pin 660 extends through pin aperture 662 in the spring plate 420 of the block 770, and the left end portion of the pin 660 is bolted to the left upright portion 215a. The center spring clip 665 on the slider pin 660 acts to keep the springs 480 working independently such that when one spring 480 is compressed, the other spring 480 does not overly expand, but is instead held in check by the clip 665.

As shown in Figs. 9A, 9B, 16, 19B, and others, because the right spring 480 is supported between the right upright portion 215b the spring plate 420, movement of the hitch base 25 in the rightward direction will act to compress the right spring 480, and the clip 665 will prevent the left spring 480 from overly expanding. More particularly, as the hitch base 25 moves rightward, the spring plate 420 will also move rightward toward the right support bracket 215b and away from the left support bracket 215a. As the spring plate 420 moves rightward, the pin aperture 662 in the spring plate 420 will move over the outer surface and along the length of the slider pin 660, and the right spring 480 will compress between the spring plate 420 and the right upright portion 215b. Alternatively, because the left spring 480 is supported between the left upright portion 215a and the spring plate 420, movement of the hitch base 25 in the leftward direction will act to compress the left spring 480, and the clip 665 will prevent the right spring 480 from overly extending. More particularly, as the hitch base 25 moves leftward, the spring plate 420 will move leftward toward the left upright portion 215b. As the spring plate 420 moves leftward, the pin aperture 662 in the spring plate 420 will move over the outer surface and along the length of the slider pin 660, and the left spring 480 will compress between the spring plate 420 and the left upright portion 215a.

### d. Employing the Wheelchair Transporter to Move a Wheelchair

The operation of the wheelchair transporter 10 is described below with respect to the structure described above with reference to all figures. To connect the wheelchair transporter 10 with the wheelchair 5, the operator 17 maneuvers the wheelchair transporter 10 toward the wheelchair 5 from behind. As the wheelchair transporter 10 approaches the rear of the wheelchair 5, the operator 17 may need to shift the hitch base 25 left of right to prevent the hitch mechanism 15 from colliding with an accessory 20, 21 connected with the wheelchair 5, such as an oxygen bottle 20 or IV pole 21. As such, the operator 17 steps on either the right or left foot pad 50 on the base control lever 45 to shift the hitch base 25 in the desired direction. With the hitch base 25 shifted, the operator 17 continues to move the wheelchair transporter 10 forward to position the hitch mechanism 15 under the seat portion 55a of the wheelchair 5. Once the hitch mechanism 15 is moved past the accessory 20, 21, the operator 17 can reduce the force exerted on the foot pad 50, which allows the springs 480 to automatically shift the hitch base 25 back to its original mid position. It is to be appreciated that if there is no obstruction in the travel path of the hitch mechanism 15, there may be no need for the operator 17 to shift the hitch base 25.

With the hitch mechanism 15 positioned under the seat portion 55a of the wheelchair 5, the operator 17 aligns the hitch members 35 with the desired connection points on the wheelchair frame 60. Once aligned, the operator 17 moves the hitch control lever 30 to extend the right and left hitch members 35 into engagement with the wheelchair frame 60, such as shown in Fig. 12. Because the hitch base 25 is slidingly coupled with the wheelchair transporter body 110, a forgiving attachment procedure is provided that does not require the operator 17 to perfectly center the hitch mechanism 15 under the seat portion 55a of the wheelchair 5. More particularly, if one hitch member 35 contacts the wheelchair frame 60 before the other hitch member, the hitch base 25 will slide sideways as the other hitch member 35 continues to extend outward to engage the wheelchair frame 60. As such, side shifting of the hitch base 25 does not lengthen or shorten the extension distance between the sliding members or tighten or loosen the engagement of the sliding members with the wheelchair frame 60. Once the wheelchair transporter 10 is driven forward for a distance, the springs 480 will cause the wheelchair transporter 10 to center itself with respect to the wheelchair 5.

To disconnect the wheelchair transporter 10 from the wheelchair 5, the operator 17 releases the positive lock by actuating the lever 703 and moves the hitch control lever 30 to retract the hitch members 35 to disengage them from the wheelchair frame 60. With the hitch members 35 retracted, the operator 17 drives the wheelchair transporter 10 backward to maneuver the hitch mechanism 15 from under the seat portion 55a of the wheelchair 5. As the wheelchair transporter 10 moves backward, the operator 17 may need to shift the hitch base 25 left or right to prevent the hitch mechanism 15 from colliding with an accessory 20, 21 connected with the wheelchair 5, such as an oxygen bottle 20 or IV pole 21. As such, the operator 17 steps on either the right or left foot pad 50 on the base control lever 45 to shift the hitch base 25 in the desired direction. With the hitch base 25 shifted, the operator 17 continues to move the wheelchair transporter 10 backward away from the wheelchair 5. Once the hitch mechanism 15 is moved past the accessory 20, 21, the operator 17 can reduce the force exerted on the foot pad 50, which allows the springs 480 to automatically shift the hitch base 25 back to its original mid position. It is to be appreciated that if there is no obstruction in the travel path of the hitch mechanism 15, there may be no need for the operator 17 to shift the hitch base 25.

It will be appreciated from the above noted description of various arrangements and embodiments of the present invention that a wheelchair transporter 10 providing powered assistance to an operator 17 moving a wheelchair 5 has been described. The wheelchair transporter 10 includes a body 110 rollingly supported by at least one wheel 130, 135 and includes a hitch mechanism 15 mounted on a hitch base 25 coupled with the base support 210. The hitch mechanism 15 can include extensible and retractable hitch members 35, and the hitch base 25 can be movable with respect to the body 110. The wheelchair transporter 10 can be formed in various ways and operated in various manners. It will be appreciated that the features described in connection with each arrangement and embodiment of the invention are interchangeable to some degree so that many variations beyond those specifically described are possible. For example, the hitch mechanism 15 can be configured not only to connect with a wheelchair 5, but also apply a lifting force to the wheelchair 5 to provide additional traction to the front drive wheel 130. Other embodiments of the wheelchair transporter 10 can be configured to carry various accessories 20, 21, such oxygen bottles 20, IV poles 21, medical charts and other documents, and other medical equipment. Still other embodiments of the wheelchair transporter 10 can include a platform to support the operator 17 during travel. In some embodiments, the hitch assembly 15 is configured to have its hitch members 220 swapped out for other hitch members 220 having different lengths, thereby allowing the transporter 10 to be repeatedly adapted for different widths of wheelchairs. Also, hitch members 220 of a certain shape or configuration may be swapped out for hitch members 220 having other shapes or configurations, thereby allowing the transporter 10 adapted to different wheelchair configurations.

Although various representative embodiments of this invention have been described above with a certain degree of particularity, those skilled in the art could make numerous alterations to the disclosed embodiments without departing from the spirit or scope of the inventive subject matter set forth in the specification and claims. All directional references (e.g., upper, lower, upward, downward, left, right, leftward, rightward, top, bottom, above, below, vertical, horizontal, clockwise, and counterclockwise) are only used for identification purposes to aid the reader's understanding of the embodiments of the present invention, and do not create limitations, particularly as to the position, orientation, or use of the invention unless specifically set forth in the claims. Joinder references (e.g., attached, coupled, connected, and the like) are to be construed broadly and may include intermediate members between a connection of elements and relative movement between elements. As such, joinder references do not necessarily infer that two elements are directly connected and in fixed relation to each other.

In some instances, components are described with reference to "ends" having a particular characteristic and/or being connected with another part. However, those skilled in the art will recognize that the present invention is not limited to components that terminate immediately beyond their points of connection with other parts. Thus, the term "end" should be interpreted broadly, in a manner that includes areas adjacent, rearward, forward of, or otherwise near the terminus of a particular element, link, component, part, member or the like. In methodologies directly or indirectly set forth herein, various steps and operations are described in one possible order of operation, but those skilled in the art will recognize that steps and operations may be rearranged, replaced, or eliminated without necessarily departing from the spirit and scope of the present invention. It is intended that all matter contained in the above description or shown in the accompanying drawings shall be interpreted as illustrative only and not limiting. Changes in detail or structure may be made without departing from the spirit of the invention as defined in the appended claims.

## Claims

1. A device (10) for transporting a wheelchair (5), the device comprising:
a body (110);
a motor driven wheel (130) coupled to the body;
a wheelchair engaging hitch mechanism (15); and
a system for positively engaging the hitch mechanism with the wheelchair.

2. The device for claim 1, wherein the system includes a first member operably coupled to the hitch mechanism and a second member that receives the first member.

3. The device of claim 2, wherein the second member binds with the first member to positively engage the hitch mechanism.

4. The device of claim 3, wherein the first member is a rod and the second member is a bracket selectively pivotal into and out of binding engagement with the rod.

5. The device of claim 4, wherein the bracket includes an opening through which the rod extends, the rod binding with an edge of the opening when the bracket and rod are in binding engagement.

6. The device of claim 4 or claim 5, wherein the system includes a spring that biases the bracket into contact with the rod.

7. The device on claim 6, wherein the system includes a system release that overcomes the bias of the spring and pivots the bracket out of binding engagement with the rod.

8. A device (10) for transporting a wheelchair (5), the device comprising:
a body (110);
a motor driven wheel (130) coupled to the body;
a hitch mechanism (15) for engaging the wheelchair and including a wheelchair engagement member; and
a locking mechanism (701) for locking the hitch mechanism in positive engagement with the wheelchair.

9. The device of claim 8, wherein the locking mechanism includes a first member and a second member, and the first and second members can be placed in engagement with each other to lock the hitch mechanism in positive engagement with the wheelchair, and the first and second members can be disengaged to allow the hitch mechanism to be disengaged from the wheelchair.

10. The device of claim 9, wherein the engagement between the first and second members is a result of the first and second members binding with each other.

11. The device of claim 9, wherein:
(a) the first member is received by the second member;
(b) the first member extends through the second member via an opening in the second member;
(c) the first member is longitudinally extendable through the second member;
(d) the second member pivots into and out of binding engagement with the first member, the locking mechanism further preferably including a spring that biases the second member into binding engagement with the first member ; and/or
(e) the first member is a rod and the second member is a bracket pivotal relative to the rod.

12. A device (10) for transporting a wheelchair (5), the device comprising:
a body (110);
a motor driven wheel (130) coupled to the body; and
a wheelchair hitching mechanism (15) coupled to the body; and
means (701) for locking the hitching mechanism in positive engagement with the wheelchair.

13. The device of claim 12, wherein the means for locking includes means for releasing the means for locking.

14. A method of transporting a wheelchair (5), the method comprising:
approaching the wheelchair with a powered wheelchair transporter (10);
engaging the wheelchair with a hitch mechanism (15) of the transporter; and
causing the engagement between the hitch mechanism and the wheelchair to be a positive engagement.

15. The method of claim 14, wherein causing the positive engagement includes creating a bind between a first member and a second member.
